# EUROPÄISCHE PATENTSCHRIFT

(11) **EP 3 880 425 B1**
(45) Veröffentlichungstag und Bekanntmachung des Hinweises auf die Patenterteilung: **21.08.2024**
(21) Anmeldenummer: 19798616.9
(22) Anmeldetag: 05.11.2019
(51) Int. Cl.: B29C 45/00, B29C 45/14, B29C 45/16, B32B 37/00, B41F 16/00

(54) **VERFAHREN ZUR HERSTELLUNG EINES BAUTEILS SOWIE SPRITZGIESSVORRICHTUNG**
METHOD FOR PRODUCING A COMPONENT, AND INJECTION MOLDING DEVICE
PROCÉDÉ DE FABRICATION D'UN COMPOSANT ET DISPOSITIF DE MOULAGE PAR INJECTION

(30) Priorität: 12.11.2018 DE 102018128194; 31.07.2019 DE 102019120711
(43) Veröffentlichungstag der Anmeldung: 22.09.2021
(73) Patentinhaber: Leonhard Kurz Stiftung & Co. KG, 90763 Fürth (DE)
(72) Erfinder: HAHN, Martin, 91567 Herrieden (DE)
(74) Vertreter: Louis Pöhlau Lohrentz
(86) Internationale Anmeldenummer: PCT/EP2019/080257
(87) Internationale Veröffentlichungsnummer: WO 2020/099191

(56) Entgegenhaltungen:
- EP-A1- 1 977 875
- CN-A- 108 749 282
- DE-B3- 102017 101 595
- JP-A- S63 135 214
- JP-B2- 4 379 874
- US-A- 5 474 134
- HERBST R ET AL: "DIE DREIFACHE KOMBINATION MEHRKOMPONENETEN-SPRITZGIESSEN VON THERMOPLASTEN ELASTOMEREN UND DUROPLASTEN", KUNSTSTOFFE, CARL HANSER VERLAG, MUNCHEN, DE, vol. 90, no. 10, 1 October 2000 (2000-10-01), XP000965889, ISSN: 0023-5563

## Beschreibung

Die Erfindung betrifft ein Verfahren zur Herstellung eines Bauteils.

Es ist bekannt, Kunststoffbauteile mittels Spritzgießen herzustellen. Zur Dekoration derartiger Bauteile ist beispielsweise in DE 102010020039 A1 ein auch als "In-Mould-Decoration" bekanntes Verfahren beschrieben. Hierzu wird zur Herstellung eines Verkleidungsteils aus Kunststoff eine Heißprägefolie eingesetzt. Diese Heißprägefolie wird von oben nach unten durch ein Spritzgusswerkzeug geführt und die Folie beim Schließen des Werkzeugs zwischen die Werkzeughälften geklemmt. Beim Einspritzen der Schmelze wird die Folie durch den Druck der Schmelze an die Wand der Kavität gepresst. Nach dem Abkühlen wird die Polyester-Trägerfolie der Heißprägefolie sodann von dem mit der Transferlage der Heißprägefolie dekorierten Bauteil abgezogen.

Nachteilig sind hier jedoch die eingeschränkten Möglichkeiten der Dekoration, aufgrund des durch die jeweilige Spritzgussformhälfte bestimmten großflächigen Applikationsbereichs sowie des hohen Drucks und der hohen Temperaturen, welchen die Dekorschichten der Heißprägefolie bei der Applikation innerhalb des Spritzgusswerkzeugs ausgesetzt sind.

Weiter ist es auch bekannt, einen Körper zur Dekoration mit einer Transferlage einer Heißprägefolie zu beprägen. Wie beispielsweise in der DE 102012109315 A1 beschrieben, weist eine derartige Prägevorrichtung als Prägeaufnahme eine Halteeinrichtung auf, in welche das zu beprägende Werkstück eingeklemmt wird. Weiter ist ein Prägewerkzeug vorgesehen, welches eine Heißprägefolie gegen die zu dekorierenden Oberflächen des Werkstücks presst, wobei der Prägedruck hier zwischen Prägeaufnahme und Prägewerkzeug aufgebaut wird.

JPS63135214A beschreibt ein Verfahren zur Herstellung eines Bauteils, bei dem ein Kennzeichnungselement nach Art einer Plakette sandwichartig zwischen zwei durch Spritzguss hergestellte Schichten aus Kunststoff eingebettet wird. Bei dem offenbarten Verfahren verbleibt das Bauteil während mehrerer Fertigungsschritte in der gleichen Formhälfte einer Spritzgussform.

In US5474134A wird ein Verfahren zum Dekorieren eines Spritzgussformteils beschrieben. Hierbei wird in einer Spritzgussform ein Spritzgussformteil erzeugt, wobei das Spritzgussformteil nach dem Spritzgießen in einer der Werkzeugformhälften verbleibt. Anschließend wird eine dekorative Folie auf das Spritzgussformteil durch einen Prägestempel aufgeprägt.

Der Erfindung liegt nun die Aufgabenstellung zugrunde, ein Verfahren zur Herstellung eines Bauteils anzugeben, welches über verbesserte Funktionen und/oder dekorative Eigenschaften verfügt und dennoch kostengünstig hergestellt werden kann.

Die Erfindung wird von einem Verfahren zur Herstellung eines Bauteils gelöst, bei dem folgende Schritte durchgeführt werden:
a) Schließen eines Spritzgusswerkzeugs umfassend eine erste Werkzeugformhälfte mit einer ersten Werkzeugkavität und zumindest eine zweite Werkzeugformhälfte, wobei eine von der ersten Werkzeugformhälfte und der zumindest einen zweiten Werkezugformhälfte bestimmte erste Spritzgusskavität ausgebildet wird,
b) Spritzgießen eines Grundkörpers durch Einbringung eines ersten Kunststoffmaterials in die erste Spritzgusskavität,
c) Öffnen des Spritzgusswerkzeugs, wobei der Grundkörper konturfolgend in der ersten Werkzeugkavität der ersten Werkzeugformhälfte verbleibt und lediglich ein erster Teilbereich der Oberfläche des Grundkörpers freigelegt wird, ein zweiter Teilbereich der Oberfläche des Grundkörpers jedoch noch in der ersten Werkzeugformhälfte verbleibt,
d) Abprägen ein oder mehrerer erster Folienelemente auf zumindest einen Teilbereich des freiliegenden ersten Teilbereichs der Oberfläche des Grundkörpers, wobei der Grundkörper konturfolgend in der ersten Werkzeugkavität der ersten Werkzeugformhälfte verbleibt und die erste Werkzeugformhälfte als Prägeaufnahme für das Abprägen der ein oder mehreren ersten Folienelemente dient,
e) Entformung des Bauteils, umfassend den Grundkörper und die ein oder mehreren ersten Folienelemente aus der ersten Werkzeugformhälfte
   wobei die zeitliche Abfolge der Schritte b) und d) so gesteuert wird, dass der Grundkörper bei Durchführung des Schritts d) nur teilweise abgekühlt ist und insbesondere noch eine mittlere Oberflächentemperatur im ersten Teilbereich der Oberfläche zwischen 20°C und 120°C, insbesondere zwischen 40°C und 100°C, aufweist, und
   als Folie in Schritt d) eine Heißprägefolie umfassend eine Trägerlage und eine von dieser ablösbare Transferlage verwendet wird und beim Abprägen zumindest ein durch die Formgebung des Prägewerkzeugs bestimmter Ausschnitt der Transferlage unter Aktivierung einer Kleberschicht der Transferlage oder einer zwischen dem Grundkörper und der Transferlage vorgesehenen Kleberschicht als erste Folienelement appliziert wird, wobei
   beim Abprägen ein durch die Formgebung des Prägewerkzeug bestimmter Ausschnitt der Transferlage der Heißprägefolie gegen einen Ausschnitt der freiliegenden Oberfläche des Grundkörpers gepresst wird, wobei eine Kleberschicht der Transferlage oder eine zwischen dem Grundkörper und der Transferlage vorgesehene Kleberschicht durch den dort erhöhten Druck/Temperatur aktiviert wird und somit im Bereich dieses Ausschnitts die Transferlage der Heißprägefolie mit der Oberfläche des Grundkörpers verklebt wird und nach Aktivierung der Kleberschicht die Heißprägefolie wieder abgezogen wird und hierbei die Trägerlage, sowie die Bereiche der Transferlage, in denen die Kleberschicht nicht aktiviert worden ist, wieder abgezogen wird, wobei als erste Folienelemente die Bereiche der Transferlage der Heißprägefolie auf dem Grundkörper verbleiben, in welchem die Kleberschicht durch das Prägewerkzeug aktiviert worden ist, wobei zwischen den Schritten d) und e) ein- oder mehrfach folgender weiterer Schritt durchgeführt wird:
      f) Aufbringen einer Deckschicht aus einem zweiten Kunststoffmaterial mittels Überfluten.

Weiter wird eine Spritzgießvorrichtung zur Herstellung eines Bauteils nach dem vorgehend beschriebenen Verfahren offenbart, bei dem die Spritzgießvorrichtung zumindest eine erste Spritzgießstation und zumindest eine Prägestation aufweist. Die Spritzgießvorrichtung weist weiter zumindest eine erste Werkzeugformhälfte mit einer ersten Werkzeugkavität und zumindest eine zweite Werkzeugformhälfte auf. Die zumindest eine erste Spritzgießstation weist eine Schließvorrichtung auf, die zum Schließen eines Spritzgusswerkzeugs umfassend die erste Werkzeugformhälfte bzw. eine der ersten Werkzeugformhälften und die zumindest eine zweite Werkzeugformhälfte unter Ausbildung einer ersten Spritzgusskavität, und zum Öffnen des Spritzgusswerkzeugs ausgebildet ist. Die zumindest eine erste Spritzgießstation weist eine Spritzeinheit zum Einbringen eines einen Grundkörper ausbildenden ersten Kunststoffmaterials in die erste Spritzgusskavität auf. Die Prägestation weist eine Prägeeinheit zum Abprägen ein oder mehrerer erster Folienelemente auf zumindest einen Teilbereich der Oberfläche des Grundkörpers auf, der konturfolgend in der ersten Werkzeugkavität der ersten Werkzeugformhälfte angeordnet ist, wobei die erste Werkzeugformhälfte der Prägeeinheit als Prägeaufnahme für das Abprägen der ein oder mehreren ersten Folienelemente dient, wobei die Spritzgießvorrichtung zumindest eine zweite Spritzgießstation, zum Aufbringen einer Deckschicht aus einem zweiten Kunststoffmaterial aufweist, mittels Überfluten.

Untersuchungen haben gezeigt, dass eine Dekoration eines in einem Spritzgießprozess hergestellten Kunststoffbauteils mittels einer nachgeschalteten Heißprägemaschine möglich ist. Hierzu werden die Bauteile aus dem Spritzgusswerkzeug nach der Abkühlphase entnommen und/oder ausgeworfen und dann in die Prägeaufnahme der Prägemaschine eingelegt. Die Prägeaufnahme bietet hier dann neben der Funktion, das Bauteil zu halten, auch den notwendigen passgenauen Unterfütterungsaufbau, damit an den benötigten Prägeflächen auch entsprechender Druck aufgebaut werden kann. Die Erfinder haben jedoch erkannt, dass sich bei einer derartigen Vorgehensweise folgende Schwierigkeiten bzw. wirtschaftliche Nachteile ergeben:
Die Prägeaufnahme, d.h. die Bauteilaufnahme muss immer sehr genau gefertigt werden. So hat sich gezeigt, dass eine genaue Fertigung der Prägeaufnahme sehr qualitätsrelevant beim Prägen in Bezug auf die Prägequalität ist. Gerade bei Mehrfachkavitäten in Spritzgusswerkzeugen ergeben sich jedoch höhere Bauteiltoleranzen, welche nur schwer durch eine entsprechende Ausbildung der Prägeaufnahme im Heißprägeprozess abgefangen werden können. Hier haben Untersuchungen weiter gezeigt, dass das hierdurch generierte Problem der Abnahme der Prägequalität mit Zunahme der Bauteilgröße zunimmt. Dies wohl auch aufgrund des Verzugs der Kunststoffbauteile im Abkühlprozess und der sich mit zunehmender Bauteilgröße erhöhenden Bauteiltoleranz. Die sinkende Prägequalität macht sich damit auch gerade bei großen Bauteilen bzw. bei Mehrfachkavitäten in der Spritzgießtechnologie besonders negativ bemerkbar, da die Bauteiltoleranzen und auch die Schwundfaktoren bzw. der Bauteilverzug hier höher sind. Dies hat weiter gezeigt, dass durch diese Problematik die Ausschussquote steigt und auch die Prozessstabilität des Prägeprozesses an seine Grenzen stoßen kann. Weiter steigen mit zunehmender Größe der Bauteile auch die Kosten für die Prägeaufnahme.

Durch die Erfindung ist es nun möglich, die Prägequalität zu verbessern und die Prozesskosten zu senken:
Um eine passgenaue Prägeaufnahme zu erhalten, welche auch alle Bauteiltoleranzen mit abformt, wird der Prägeprozess in die Spritzgussmaschine integriert und entsprechend die Werkzeugformhälfte, welche insbesondere die sogenannte Bauteilunterseite abformt, als Prägeaufnahme verwendet. Somit wird vermieden, das Bauteil vor der Durchführung des Abprägens umzusetzen und es wird vielmehr weiterhin in der Spritzgusskavität auch beim Abprägen gehalten. Die an sich stabile Bauweise von Spritzgießmaschinen und Spritzgusswerkzeugen, die für die dort auftretenden sehr hohen Drücke und Temperaturen nötig sind, ermöglicht hierbei, den entsprechend benötigten Prägedruck (abhängig von der Dekorfläche, Bauteilgröße und dem Kunststoffmaterial) beim Abprägen aufzunehmen. Weiterhin ist es möglich, die Restwärme des Spritzgießprozesses im Bauteil als zusätzliche Prägeenergie zu nutzen und hierdurch auch Energieeinsparungen und/oder verkürzte Prägezeiten und/oder verbesserte Haftungen zwischen der Bauteiloberfläche und den ein oder mehreren Folienelementen zu erreichen.

Dadurch, dass das Bauteil vor dem Entformen beprägt wird und das Bauteil konturfolgend in der ersten Werkzeugkavität beim Abprägen verbleibt und die erste Werkzeugformhälfte, die zuvor zur Formung des Bauteils diente, als Prägeaufnahme für das Abprägen dient, werden die vorgenannten Nachteile vermieden. Hierdurch wird sichergestellt, dass die Prägeaufnahme genau definiert an das Bauteil angepasst ist und alle Bauteiltoleranzen passgenau mit abformen. Das Abprägen kann hierdurch weiter auch vor dem vollständigen Abkühlen und vor dem Entformen des Bauteils durchgeführt werden, wodurch auch die durch den thermischen Verzug und ggf. mechanischen Verzug beim Entformen auftretenden Bauteiltoleranzen nicht negativ den Prägeprozess und damit die Prägequalität beeinflussen. Hierzu hat sich weiter auch gezeigt, dass die Abstimmungsarbeiten zur Optimierung des Prägeprozesses deutlich reduziert werden können und die Prägequalität sowie die Prozessstabilität sich deutlich erhöhen.

Weiter haben Untersuchungen gezeigt, dass sich hierdurch auch positive Effekte bezüglich der Haftung zwischen abgeprägten Folienelementen und mittels Spritzgießen hergestelltem Grundkörper ergeben. Dies wohl, da hier das Abprägen unmittelbar nach Abschluss des Spritzgießprozesses erfolgt und somit das Abprägen zu einem Zeitpunkt durchgeführt wird, zu dem der Grundkörper noch über eine besonders reaktive Oberfläche verfügt, welche sich aufgrund der vorgehenden Spritzgießprozesses im Weiteren noch auf einem recht hohen Temperaturniveau befindet.

Weitere Vorteile ergeben sich bei Durchführung des Abprägens mittels eines Heißprägeprozesses, da hier die Prozesswärme des Spritzgießprozesses für den Prägeprozess eingesetzt werden kann und sich damit im Weiteren im Gesamtprozess entsprechende Energieeinsparungen und/oder verkürzte Prägezeiten erzielen lassen.

Weitere Vorteile der Erfindung ergeben sich dadurch, dass das Abprägen während der Abkühlphase des Spritzgießprozesses durchgeführt werden kann, so dass sich trotz der zusätzlichen Dekoration die Zykluszeit des Herstellungsprozesses nicht verlängert. Durch diese "Parallelisierung" ergibt sich eine entsprechende Verringerung der Produktionszeit, welche im Weiteren auch mit entsprechenden Kosteneinsparungen verbunden ist.

Vorteilhafte Ausführungsbeispiele der Erfindung sind in den Unteransprüchen bezeichnet.

Erfindungsgemäß erfolgt nach dem Abprägen der ein oder mehreren ersten Folienelemente in einem weiteren Schritt das Aufbringen einer Deckschicht aus einem zweiten Kunststoffmaterial, welches mittels Überfluten durchgeführt wird. Hierdurch ist es beispielsweise möglich, die ein oder mehreren ersten Folienelemente und/oder die Oberfläche des Grundkörpers mit einer zusätzlichen Schutzschicht zu versehen oder weitere funktionelle Strukturen in dem Bauteil und/oder auf dem Bauteil zu schaffen. Besonders vorteilhaft hierbei ist, dass es hierdurch möglich ist, die ein oder mehreren ersten Folienelemente vollständig oder bereichsweise in mittels Spritzgießen hergestellte Schichten des Bauteils zu integrieren.

Vorzugsweise verbleibt bei der Durchführung dieses Schritts der Grundkörper konturfolgend in der ersten Werkzeugkavität der ersten Werkzeugformhälfte. Die erste Werkzeugformhälfte wird damit nicht nur dafür zusätzlich genutzt, die Prägeaufnahme für das Abprägen der ein oder mehreren ersten Folienelemente auszubilden, sondern bildet auch die Bauteilaufnahme für das Aufbringen der Deckschicht aus.

Vorzugsweise wird bei der Durchführung dieses Schritts eine zweite Spritzgusskavität mittels ein oder mehrere dritter Werkzeugformhälften ausgebildet, und das zweite Kunststoffmaterial in die zweite Spritzgusskavität eingebracht. Hierbei erfolgt vorzugsweise ein Abdichten der ein oder mehreren dritten Werkzeugformhälften gegen den Grundkörper, die ein oder mehreren ersten Folienelemente und/oder die erste Werkzeugformhälfte, wodurch eine entsprechend große Variationsbreite bezüglich der Bereiche ermöglicht wird, welche mit der Deckschicht versehen werden.

Vorteilhaft ist es hierbei, die Deckschicht derart aufzubringen, dass die ein oder mehreren Folienelemente zwischen dem Grundkörper und der Deckschicht eingekapselt sind. Durch diese Einkapselung ist es möglich, die Folienelemente entsprechend gut vor Umwelteinflüssen zu schützen oder durch die hierdurch bewirkten Interaktionen besonders vorteilhafte optische und/oder funktionelle Effekte zu erzielen.

Weiter ist es auch möglich, dass die Deckschicht derart aufgebracht wird, dass die Deckschicht die ein oder mehreren ersten Folienelemente und/oder den ersten Teilbereich der Oberfläche des Grundkörpers vollständig überlappt. Hierdurch lässt sich beispielsweise eine entsprechend geschlossene Schutzschicht oder Dekorschicht in dem entsprechenden Teilbereich der Oberfläche des Bauteils schaffen, welcher beispielsweise die der Witterung ausgesetzte Außenseite des Bauteils ausbilden soll.

Weiter ist es auch möglich, dass die Deckschicht derart aufgebracht wird, dass die Deckschicht die ein oder mehreren ersten Folienelemente und/oder den ersten Teilbereich der Oberfläche des Grundkörpers lediglich teilflächig überlappt. Diese teilflächige Überlappung kann im Weiteren auch im Register zu den ein oder mehreren ersten Folienelementen und/oder dem ersten Teilbereich der Oberfläche des Grundkörpers erfolgen, um so entsprechend registerhaltig durch die Deckschicht funktionelle und/oder dekorative Elemente zu schaffen, welche entsprechend mit dekorativen Elementen und/oder Funktionen der ersten Folienelemente zusammenwirken und/oder diese ergänzen.

Unter Register oder Passer beziehungsweise Registergenauigkeit oder Passergenauigkeit ist eine Lagegenauigkeit zweier oder mehrerer Elemente und/oder Schichten zueinander zu verstehen. Dabei soll sich die Registergenauigkeit innerhalb einer vorgegebenen Toleranz bewegen und dabei möglichst gering sein. Gleichzeitig ist die Registergenauigkeit von mehreren Elementen, Teilbereichen, insbesondere ein oder mehrerer ersten Teilbereichen, Folien und/oder Schichten zueinander ein wichtiges Merkmal, um die Prozesssicherheit zu erhöhen. Die lagegenaue Positionierung erfolgt dabei insbesondere mittels Markierungen, insbesondere mittels sensorisch, vorzugsweise optisch detektierbarer Passermarken oder Registermarken. Diese Markierungen, insbesondere Passermarken oder Registermarken, stellen dabei vorzugsweise entweder spezielle separate Elemente oder Bereiche oder Schichten dar oder sind vorzugsweise selbst Teil der zu positionierenden Elemente oder Bereiche oder Schichten.

Das zweite Kunststoffmaterial kann aus einem thermoplastischen Kunststoffmaterial und/oder aus einem durch Vernetzung aushärtenden Kunststoffmaterial, insbesondere einem Zweikomponenten-Material (2K) und/oder aus einem thermisch und/oder aus einem durch Strahlung härtbaren Material und/oder aus einer Mischung solcher Kunststoffmaterialen bestehen.

Besonders vorteilhaft besteht das zweite Kunststoffmaterial aus einem Zweikomponentenkunststoff, welcher beim Einspritzen der zwei Komponenten, insbesondere in die zweite Spritzgusskavität in einem Mischkopf gemischt wird, sodass ein Gemisch in die zweite Spritzgusskavität gelangt. Die Reaktion des Gemisches findet in der zweiten Spritzgusskavität statt und kann auch noch nach Öffnen des Werkzeugs weiter ablaufen. Mittels des Einsatzes derartiger Materialien ist es möglich, eine besonders harte und witterungsbeständige Deckschicht zu erzielen.

Weiter ist es auch möglich, dass das zweite Kunststoffmaterial in einem späteren oder mehreren späteren Schritt(en) nachgehärtet oder ausgehärtet wird. Eine derartige Nachhärtung oder Aushärtung kann beispielsweise mittels Bestrahlung, insbesondere UV-Bestrahlung und/oder Elektronenstrahlhärtung, erfolgen.

Als zweites Kunststoffmaterial werden vorzugsweise Kunststoffmaterialien aus Polyurethan oder Polyurea eingesetzt. Die Dicke der Deckschicht wird vorzugsweise in einem Bereich zwischen 100 µm und 20000 µm, insbesondere 100 µm bis 10000 µm, bevorzugt zwischen 200 µm und 5000 µm, gewählt.

Das erste Kunststoffmaterial besteht vorzugweise aus einem Thermoplast, insbesondere aus einem schlagzähen Thermoplast. Das erste Kunststoffmaterial besteht insbesondere aus Polyäthylen (PE), Polycarbonat (PC), Polypropylen (PP), Polystyrol, Polybutadien, Polynitrile, Polyester, Polyurethane, Polymethacrylate, Polyacrylate, Polyamide, Polyethylenterephthalat (PET), Polybutylenterephthalat (PBT), bevorzugt Acrylnitril-Butadien-Styrol (ABS), Acrylester-Styrol-Acrylnitril (ASA), ABS-PC, PET-PC, PBT-PC, PC-PBT und/oder ASA-PC und/oder Copolymeren oder Gemischen davon. Das erste und /oder zweite Kunststoffmaterial kann weiter grundsätzlich noch anorganische oder organische Füllstoffe, bevorzugt SiO₂, Al₂O₃, TiO₂, Tonmineralien, Silikate, Zeolithe, Glasfasern, Kohlenstofffasern, Glaskugeln, organische Fasern oder Gemischen davon enthalten. Die Füllstoffe werden hierbei insbesondere dem ersten Kunststoffmaterial zugemischt, um die Stabilität des Grundkörpers weiter zu erhöhen. Weiter können diese Füllstoffe den Anteil an polymeren Materialien verringern und so die Herstellungskosten und/oder das Gewicht des Bauteils vermindern.

Besonders vorteilhaft ist es, den Schritt der Aufbringung einer Deckschicht aus dem zweiten Kunststoffmaterial, insbesondere durch Überspritzen, Überfluten und Spritzgießen, mehrfach zu wiederholen. Hierbei können in den aufeinanderfolgenden Schritten weiter auch unterschiedliche zweite Kunststoffmaterialen und/oder unterschiedliche dritte Werkzeugformhälften eingesetzt werden, so dass entsprechende, sich bezüglich ihrer Ausformung und/oder ihrem Material unterscheidende Deckschichten aufeinander aufgebracht werden. Weiter ist es hierbei auch möglich, den Schritt d), d.h. das Abprägen der ein oder mehreren Folienelemente, jeweils zusätzlich noch ein- oder mehrfach nach dem jeweiligen Aufbringen der Deckschicht durchzuführen. Es ist so beispielsweise möglich, nach Aufbringen einer ersten Deckschicht, nochmals den Schritt d) durchzuführen, hierauf dann nochmals eine weitere Deckschicht, ggf. in unterschiedlicher Ausformung und/oder aus unterschiedlichem Material, aufzubringen, hierauf nochmals ein oder mehrere erste Folienelemente abzuprägen usw. Hierdurch wird ermöglicht, entsprechend komplexe dekorative und/oder funktionelle Funktionen in dem Bauteil kostengünstig zu realisieren.

Vorzugsweise verbleibt bei sämtlichen dieser Schritte der Grundkörper konturfolgend in der ersten Werkzeugkavität der ersten Werkzeughälfte. Hierdurch wird zum einen eine entsprechend hohe Prägequalität auch für die weiteren Prägeschritte sichergestellt, und im Weiteren auch eine besonders gute Registerhaltigkeit der aufgebrachten weiteren ersten Folienelemente, sowie der weiteren Deckschichten erzielt. Hierdurch wird die Registerhaltigkeit der aufgebrachten Folienelemente und/oder Deckschichten und damit die Produktqualität weiter deutlich verbessert und der Ausschuss entsprechend verringert.

Erfindungsgemäß wird die zeitliche Abfolge der Schritte b) und d), d.h. des Spritzgießens des Grundkörpers und des Abprägens der ein oder mehreren ersten Folienelemente so gesteuert, dass der Grundkörper bei Durchführung des Schritts d) nur teilweise abgekühlt ist. Hierdurch lassen sich die bereits oben dargelegten Vorteile verwirklichen. So wird hierdurch zum einen eine besonders gute Zwischenschichthaftung zwischen der Oberfläche des Grundkörpers und den ein oder mehreren ersten Folienelementen erzielt. Weiter ist es hierdurch möglich, die Prozessenergie des Spritzgießprozesses zusätzlich für den Prägeprozess zu nutzen und hierdurch Energieeinsparungen und/oder eine Verkürzung der Prägezeit zu erzielen.

Eine entsprechende Ansteuerung der zeitlichen Abfolgen erfolgt vorzugsweise auch für den Fall, dass nach Durchführung des Schritts "Aufbringung einer Deckschicht" nochmals ein Prägen einer oder mehrerer Folienelemente erfolgt, um bei in einem derartigen Verfahrensablauf ebenfalls die vorgenannten Vorteile zu verwirklichen.

Untersuchungen haben hier weiter ergeben, dass die vorgenannten Vorteile besonders gut zu erreichen sind, wenn der Grundkörper bzw. die Deckschicht eine mittlere Oberflächentemperatur insbesondere im ersten Teilbereich der Oberfläche des Grundkörpers zwischen 20° und 120°, insbesondere zwischen 40° und 100°, vorzugsweise zwischen 50° und 80°, aufweist.

Das Abprägen der ein oder mehreren ersten Folienelemente in Schritt d) kann vorzugsweise mittels Abrollprägen, partiellem Abrollprägen oder Hubprägen durchgeführt werden. Weiter ist es auch möglich, hierzu entsprechende Prägeverfahren einzusetzen, wie diese in der DE 102012109315 A beschrieben sind.

Das Abprägen der ein oder mehreren ersten Folienelemente wird vorzugsweise mit einem oder mehreren Prägewerkzeug(en) durchgeführt, welche eine Folie oder ein/oder mehrere Abschnitte einer Folie als erste Folienelemente auf den freiliegenden ersten Teilbereich oder einen Teilbereich des freiliegenden ersten Teilbereichs der Oberfläche des Grundkörpers applizieren. Bei den Prägewerkzeugen handelt es sich hierbei vorzugsweise um Prägestempel oder Prägewalzen, welche ggf. auch entsprechend an die Formgebung des Grundkörpers angepasst sein können oder in ihrer Führung und in ihrem Abrollverhalten eine entsprechende Konturfolge bezüglich der Oberflächenkontur des ersten Teilbereichs der Oberfläche des Grundkörpers ermöglichen bzw. an diese angepasst sind. Derartige Prägestempel und Prägewalzen weisen jeweils vorzugsweise einen elastomeren Grundkörper oder elastomere Schichten, beispielsweise aus Silikon, auf.

Als Folien kommen bei der Durchführung des Schritts d) insbesondere Transferfolien, beispielsweise Heißprägefolien oder Kaltprägefolien, aber auch Laminierfolien, in Frage.

Besonders geeignet für den Einsatz sind hierbei Transferfolien, welche eine Trägerlage und eine von dieser ablösbare Transferlage umfassen. Die Trägerlage besteht hierbei vorzugsweise aus einer Kunststofffolie, beispielsweise eine PET-Folie mit einer Dicke zwischen 10 µm und 250 µm. Die Transferlage weist hierbei eine oder mehrere Schichten auf, welche vorzugsweise ausgewählt sind aus: einer oder mehreren Dekorschichten, einer oder mehreren funktionellen Schichten, einer oder mehreren Schutzschichten, einer oder mehreren Haftvermittlungsschichten, einer oder mehreren Barriereschichten, einer oder mehreren leitfähigen Schichten.

Weiter ist es vorteilhaft, wenn zwischen der Trägerlage und der Transferlage eine oder mehrere Ablöseschichten angeordnet sind, welche die Ablösbarkeit verbessern. Derartige Schichten enthalten vorzugsweise Wachse und/oder Silikone und/oder Polymeren.

Falls eine derartige Transferfolie als Prägefolie ausgestaltet ist, weist diese vorzugsweise an der der Trägerlage abgewandten Seite der Transferfolie eine thermisch aktivierbare Kleberschicht auf, welche insbesondere durch die thermische Energie des Prägewerkzeugs aktiviert werden kann.

Weiter ist es auch möglich, dass die Transferlage der Transferfolie weiter beispielsweise mittels Stanzen oder Schneiden oder Lasereinwirkung eingebrachte Ausnehmungen aufweist oder die Transferlage in Form von Patches auf der Trägerlage vorgesehen ist. Derartige Transferlagen weisen weiter vorzugsweise auch noch eine oder mehrere Trägerfolien zur Stabilisierung der Transferlage auf. Hierdurch ergibt sich weiter der Vorteil, dass "sensible" Funktions- und Dekorschichten einen zusätzlichen Schutz vor den thermischen und mechanischen Belastungen des Prägeprozesses bzw. den nachfolgenden Prozessschritten erhalten.

Laminierfolien weisen vorzugsweise nicht eine "ablösbare" Trägerlage auf. Laminierfolien weisen vorzugsweise eine oder mehrere der folgenden Schichten auf: eine oder mehrere Dekorschichten, eine oder mehrere funktionelle Schichten, eine oder mehrere Schutzschichten, eine oder mehrere Trägerschichten, eine oder mehrere Haftvermittlerschichten, eine oder mehrere Trägerfolien, eine oder mehrere Barriereschichten, eine oder mehrere leitfähige Schichten.

Vorzugsweise weisen die Laminierfolien hierbei insbesondere durch Stanzen und/oder Schneiden und/oder Lasereinwirkung eingebrachte Ausnehmungen auf oder werden bereits beim Abprägen in Form von "Pillen" dem Prägeprozess zugeführt.

Die mittels der einen oder mehreren Prägewerkzeuge applizierten ein oder mehreren ersten Folienelemente weisen hierbei vorzugsweise eine Formgebung auf, welche durch die Gestaltung der ein oder mehreren Prägewerkzeuge, der Formgebung der Folie bzw. der Transferlage der Folie und/oder durch weitere Maßnahmen, wie weiter unten beschrieben, in weitem Umfang vorbestimmt werden können. Diese Folienelemente werden bezüglich ihres Schichtaufbaus durch den entsprechenden Schichtaufbau der für das Abprägen eingesetzten Folie bzw. der Transferlage der für das Abprägen eingesetzten Folie bestimmt. Die ein oder mehreren ersten Folienelemente weisen damit vorzugsweise jedenfalls eine oder mehrere Schichten auf, ausgewählt aus: eine oder mehrere Dekorschichten, eine oder mehrere funktionellen Schichten, eine oder mehrere Schutzschichten, eine oder mehrere Haftvermittlungsschichten, eine oder mehrere Kleberschichten, eine oder mehrere Trägerschichten, eine oder mehrere Trägerfolien.

Eine Dekorschicht oder die Dekorschichten bestehen hierbei vorzugsweise aus einer oder einer Kombination folgender Dekorschichten:
- Transparente oder transluzente oder opake Lackschicht enthaltend Farbstoffe und/oder Pigmente, insbesondere organische/anorganische Pigmente, lumineszente und/oder fluoreszente Pigmente und/oder Farbstoffe, optisch variable Pigmente, thermochrome Pigmente und/oder Farbstoffe, metallische Pigmente, magnetisch ausrichtbare Pigmente,
- Volumenhologrammschicht,
- Schicht mit optisch aktivem Oberflächenrelief, insbesondere einem diffraktiven und/oder refraktiv wirkenden Oberflächenrelief, einem holografischen Oberflächenrelief, einem Oberflächenrelief enthaltend refraktive Strukturen, diffraktive Strukturen, insbesondere Linsenstrukturen, Mikrolinsenanordnungen, Mikroprismen, Mikrospiegel, Mattstrukturen, insbesondere isotrope und/oder anisotrope Mattstrukturen und/oder eine Kombination beliebiger derartiger Strukturen;
- Reflexionsschichten, insbesondere metallische oder dielektrische Reflexionsschichten;
- hochbrechende oder niedrigbrechende Schichten, insbesondere mit Brechungsindizes, die sich um mehr als +/- 0,2 von einem Brechungsindex von 1,5 unterscheiden;
- Flüssigkristallschichten, insbesondere cholesterische und/oder nematische Flüssigkristallschichten;
- Dünnfilmschichten, welche einen optisch variablen Farbänderungseffekt zeigen, insbesondere umfassend eine Absorberschicht, eine dielektrische Abstandsschicht und eine optionale Reflexionsschicht oder alternativ umfassend eine mehrfache Abfolge von abwechselnden hochbrechenden und niedrigbrechenden transparenten Schichten.

Diese Dekorschichten können hierbei in beliebiger Abfolge aufeinander und/oder nebeneinander aufgebracht sein. Jede einzelne Dekorschicht kann hierbei teilflächig in Musterform ausgebildet sein, um insbesondere ein gewünschtes grafisches Dekor zu erzielen. Die Dekorschichten sind bevorzugt relativ zueinander im Register angeordnet.

Die funktionelle Schicht oder die funktionellen Schichten bestehen vorzugsweise aus einer oder einer Kombination der folgenden angeführten funktionellen Schichten: Schichten mit einer elektrischen Funktionalität, insbesondere umfassend ein oder mehrere Elemente ausgewählt aus: Touchsensor, Antenne, elektromagnetische Abschirmung, elektrisch nicht leitfähige, metallische Schichten zur Vermeidung elektrostatischer Aufladung, Display, LED, elektrische Schaltung, Solarzelle, Schicht mit einer magnetischen Funktionalität, beispielsweise einem magnetischen Barcode, Schichten mit mechanischer Funktionalität, beispielsweise Verstärkungselemente oder Versteifungselemente aus Metall und/oder Kunststoff und/oder gewebte und/oder ungewebte Faserlagen und/oder faserige Zuschlagstoffe und/oder faserige Zusatzschichten, Schichten mit optischer Funktionalität, beispielsweise Antireflexionsschichten oder Reflexionsschichten, Schichten mit taktiler Funktionalität, beispielsweise Softtouch-Oberflächenbeschichtungen.

Beim Abprägen der einen oder mehreren ersten Folienelemente wird bei Verwendung einer Heißprägefolie, vorzugsweise ein durch die Formgebung des Prägewerkzeugs bestimmter Ausschnitt einer Transferlage unter Aktivierung einer Kleberschicht der Transferlage oder einer zwischen dem Grundkörper und der Transferlage vorgesehenen Kleberschicht als erstes Folienelement appliziert.

Weiter ist es vorteilhaft, insbesondere bei Einsatz einer Kaltprägefolie, auf die Trägerlage und/oder auf einen Teilbereich der Oberfläche des Grundkörpers eine Kleberschicht in einem ersten Bereich aufzubringen, in einem zweiten Bereich jedoch nicht aufzubringen, mittels des Prägewerkzeugs die Transferfolie gegen die Oberfläche des Grundkörpers zu führen, die Kleberschicht zu aktivieren und die Transferfolie wieder abzuziehen, so dass ein durch die Formgebung des ersten Bereichs bestimmter Ausschnitte der Transferlage als erstes Folienelement auf den Grundkörper appliziert wird. Das Aufbringen der Kleberschicht erfolgt hierbei vorzugsweise mittels eines digitalen Druckverfahrens, insbesondere mittels eines Inkjet-Druckkopfes.

Die Kleberschicht wird bevorzugt mittels energiereicher elektromagnetischer Strahlung gehärtet. Die Härtung kann dabei insbesondere vor und/oder während und/oder nach der Applikation der Transferlage auf die Kleberschicht erfolgen. Erfolgt die Härtung vor der Applikation der Transferlage auf die Kleberschicht, kann dadurch die Kleberschicht vorgehärtet werden, um beispielsweise die Viskosität der Kleberschicht gezielt zu erhöhen. Erfolgt die Härtung während der Applikation der Transferlage auf die Kleberschicht, kann die Härtung bei noch mit der Transferlage verbundener Trägerlage erfolgen. Erfolgt die Härtung nach der Applikation der Transferlage auf die Kleberschicht, kann die Härtung bei bereits von der Transferlage abgezogener Trägerlage und frei liegender Transferlage von der Oberseite des Grundkörpers her erfolgen.

Während der Härtung der Kleberschicht können durch die auf das Bauteil und die ersten und/oder zweiten Folienelemente einwirkende Strahlung auch noch weitere Schichten und/oder Teilbereiche des Bauteils und/oder der ersten und/oder zweiten Folienelemente gleichzeitig mit gehärtet oder nachgehärtet werden.

Weiter ist es vorteilhaft, dass vor Durchführung des Schritts a), d.h. Schließen des Spritzgusswerkzeugs, ein oder mehrere zweiten Folienelemente in die erste Spritzgusskavität eingebracht werden. Die ein oder mehreren zweiten Folienelemente werden hierzu insbesondere in die erste Werkzeughälfte als Einzelelemente eingelegt und/oder in Form einer Folienbahn zugeführt.

Bei dem einen oder mehreren zweiten Folienelement, kann es sich vorzugsweise
- entweder um eine vorzugsweise in teilflächiger Form, beispielsweise als "Label" ausgebildete Laminierfolie oder um ein sogenanntes "Insert" als ein insbesondere mit Dekorations- und/oder Funktionselementen versehenes, vorgeformtes Teilelement
- oder um ein Einlegeteil insbesondere als funktionelles Verstärkungs- oder Versteifungselement aus Metall und/oder Kunststoff und/oder Faserverbundstoff und/oder Kunststoff mit Faserkomponenten
- oder um eine Transferfolie
handeln.

Die ein oder mehreren zweiten Folienelemente werden sodann im Schritt b) mit dem ersten Kunststoffmaterial hinterspritzt und/oder umspritzt.

Hierdurch ist es möglich, eine "beidseitige" Dekoration des Bauteils bzw. ein beidseitiges Versehen des Bauteils mit den gewünschten funktionellen Schichten zu erzielen. So wird beispielsweise die Unterseite des Grundkörpers von den ein oder mehreren zweiten Folienelementen gebildet und auf der Oberseite des Grundkörpers bilden die ein oder mehreren ersten Folienelemente die Oberseite des Bauteils aus.

Dabei kann das Bauteil und/oder der Grundkörper opak oder transluzent oder transparent ausgebildet sein, um unterschiedliche optische Erscheinungsbilder des Bauteils bereitzustellen.

Ist das Bauteil und/oder der Grundkörper beispielsweise transparent ausgebildet, kann die beidseitige Dekoration gemeinsam einen Tiefeneffekt durch die Beabstandung beider Dekorationen durch die Wandstärke des Bauteils und/oder des Grundkörpers erzeugen. Hierzu wird vorzugsweise die Dicke des Grundkörpers so gewählt, dass die ein oder mehreren ersten Folienelemente einerseits und die ein oder mehreren zweiten Folienelemente andererseits derart voneinander beabstandet sind, dass ein optischer Tiefeneffekt durch Zusammenwirken der ein oder mehreren ersten und ein oder mehreren zweiten Folienelemente generiert wird.

Ist das Bauteil und/oder der Grundkörper beispielsweise opak ausgebildet, kann die beidseitige Dekoration durch die ein oder mehreren ersten und zweiten Folienelemente ein unterschiedliches optisches Erscheinungsbild des Bauteils von unterschiedlichen Seiten bereitstellen.

Durch die Verwendung ein oder mehrerer erster Folienelemente und ein oder mehrerer zweiter Folienelemente kann auch eine Kombination von dekorativen Folien und funktionellen Folien erfolgen. Beispielsweise kann auf einer Seite des Bauteils eine Dekoration erfolgen und auf der anderen Seite des Bauteils eine Applikation eines Funktionselements, beispielsweise eines Touchsensors oder einer Antenne oder eines Displays erfolgen.

Dabei kann der Herstellungsprozess so ausgestaltet werden, dass die Folienelemente, die beständiger gegenüber Druck und/oder Wärme sind, als zweite Folienelemente eingesetzt werden und die Folienelemente, die weniger beständig gegenüber Druck und/oder Wärme sind, als erste Folienelemente eingesetzt werden. In dieser Variante kann also als ein oder mehrere erste Folienelemente ein funktionelles Element auf das Bauteil appliziert werden und als ein oder mehrere zweite Folienelemente ein dekoratives Element auf das Bauteil appliziert werden.

Der Herstellungsprozess kann alternativ dazu auch so ausgestaltet sein, dass als ein oder mehrere zweite Folienelemente ein oder mehrere funktionelle Elemente auf das Bauteil appliziert werden und als ein oder mehrere erste Folienelemente ein oder mehrere dekorative Elemente auf das Bauteil appliziert werden.

Besonders vorteilhaft ist hierbei, dass durch das Verfahren die ein oder mehreren ersten und zweiten Folienelemente besonders registergenau relativ zueinander angeordnet werden können. Dies, da sowohl beim Hinterspritzen der ein oder mehreren zweiten Folienelemente, als auch beim Abprägen der ein oder mehreren ersten Folienelemente der Grundkörper durch die erste Werkzeugkavität der ersten Werkzeugformhälfte festgelegt ist und somit diesbezüglich kein weiterer Registrierungsschritt mehr zu erfolgen hat.

Vorzugsweise werden weiter bei der Durchführung des Schritts d), d.h. dem Abprägen der ein oder mehreren Folienelemente, ein oder mehrere der ersten Folienelemente registergenau zu ein oder mehreren der zweiten Folienelemente abgeprägt. Hierzu ist es vorteilhaft, ein oder mehrere Registermarken und/oder optischen Merkmale der ein oder mehreren zweiten Folienelemente und/oder der ersten Werkzeugformhälfte zu erfassen und diese zur Steuerung des Abprägens zu verwenden. Zusätzlich können entsprechende Registermarken und/oder optische Merkmale der Folie erfasst werden, welche beim Abprägen der ein oder mehreren ersten Folienelemente, wie oben dargelegt, eingesetzt werden.

Weiter ist es von Vorteil, wenn das Verfahren weiter folgenden Schritt umfasst, der bevorzugt nach dem Schritt c) und/oder d) und weiter bevorzugt vor einem der Schritte e) und/oder f) durchgeführt wird:
Bedrucken der ein oder mehreren ersten Folienelemente und/oder des freiliegenden ersten Teilbereichs der Oberfläche des Grundkörpers in zumindest einem weiteren Teilbereich, wobei der Grundkörper konturfolgend in der ersten Werkzeugkavität der ersten Werkzeughälfte verbleibt und insbesondere die erste Werkzeugformhälfte als Bedruckhalterung für das Bedrucken der ein oder mehreren Folienelemente und/oder des freiliegenden ersten Teilbereichs der Oberfläche des Grundkörpers in dem zumindest einen weiteren Teilbereich dient.

So ist es auch möglich, dass der obige Schritt des Bedruckens zwischen den Schritten c) und d) und/oder d) und f) durchgeführt wird.

Hierbei ist es möglich, dass der zumindest eine weitere Teilbereich innerhalb des zumindest einen Teilbereichs liegt, in dem die in oder mehreren ersten Folienelemente abgeprägt sind. In diesem Fall erfolgt die Bedruckung insbesondere auf die freie Oberfläche der abgeprägten ein oder mehreren Folienelemente.

Es ist jedoch auch möglich, dass der zumindest eine weitere Teilbereich lediglich in dem freiliegenden ersten Teilbereichs der Oberfläche des Grundkörpers liegt. In diesem Fall erfolgt die Bedruckung insbesondere neben bzw. benachbart zu den abgeprägten ein oder mehreren Folienelementen.

Ferner ist es weiter möglich, dass der zumindest eine weitere Teilbereich sowohl innerhalb des zumindest einen Teilbereichs liegt, in dem die in oder mehreren ersten Folienelemente abgeprägt sind, als auch in dem freiliegenden ersten Teilbereichs der Oberfläche des Grundkörpers liegt. In diesem Fall überlappt die Bedruckung sowohl die ein oder mehreren ersten Folienelemente als auch den freiliegenden ersten Teilbereich der Oberfläche des Grundkörpers zumindest bereichsweise.

Vorteilhafter erfolgt das Bedrucken mit einem Bedruckstoff. Bevorzugt handelt es sich bei Bedruckstoff um eine Tinte oder um einen Lack.

Es ist weiter von Vorteil, wenn das Bedrucken registergenau zu den ein oder mehreren ersten und/oder zweiten Folienelementen erfolgt, wozu insbesondere ein oder mehrere Registermarken oder optische Merkmale der ein oder mehreren ersten und/oder zweiten Folienelemente und/oder der ersten Werkzeugformhälfte erfasst werden und zur Steuerung des Bedruckens verwendet werden.

Weiter ist es zweckmäßig, wenn das Bedrucken in dem zumindest einen weiteren Teilbereich farbig, insbesondere in beliebigen und/der verschiedenen Farben, erzeugt wird.

Unter Farbigkeit wird hierbei jede Farbe verstanden die in einem Farbmodell wie z.B. dem RGB-Farbmodell (R = Rot; G = Grün; B = Blau) oder dem CMYK-Farbmodell (C = Cyan; M = Magenta; Y = Gelb; K = Schwarz) als Farbpunkt innerhalb eines Farbraums dargestellt werden kann.

Vorzugsweise stellt die Bedruckung in dem zumindest einen weiteren Teilbereich zumindest ein Dekor bzw. ein visuell erkennbares Designelement dar, welches beispielsweise ein graphisch gestalteter Umriss, eine figürliche Darstellung, ein Bild, ein Motiv, ein Symbol, ein Logo, ein Portrait, ein Muster, ein Raster, ein alphanumerisches Zeichen, ein Text und dergleichen sein kann.

Vorteilhafterweise wird das Bedrucken hierbei mittels Digitaldruck, bevorzugt mittels Tintenstrahldruck bzw. Inkjetdruck, und/oder Tampondruck durchgeführt. Vorteilhafterweise wird der Digitaldruck, bevorzugt der Tintenstrahldruck bzw. Inkjetdruck, und/oder Tampondruck in einer Druckstation bzw. Druckeinheit durchgeführt.

Neben der Durchführung der oben beschriebenen Schritte ist es weiter vorteilhaft, einen oder mehrere der folgenden Schritte, auch mehrfach, bei der Herstellung des Bauteils durchzuführen:
Vorzugsweise erfolgt eine Vorbehandlung eines freiliegenden Teilbereichs der Oberfläche des Grundkörpers und/oder der ein oder mehreren ersten Folienelemente. Diese Vorbehandlung wird so vorzugsweise zwischen den Schritten c) und d) und/oder zwischen dem Schritt d) und dem Aufbringen der Deckschicht durchgeführt und/oder vor dem Bedrucken. Falls noch weitere Prägungen durchgeführt werden und/oder mehrfach eine Deckschicht aufgebracht wird, wie oben ausgeführt, wird eine derartige Vorbehandlung vorzugsweise auch vor Durchführung dieser jeweiligen Schritte durchgeführt.

Als Vorbehandlung werden vorzugsweise eines oder mehrere der folgenden Bearbeitungsverfahren durchgeführt: Oberflächenaktivierung, insbesondere durch Begasen, Beflammung, Plasmabehandlung, Fluorierung, Bestrahlung, Reinigung, Beschichtung.

Besonders vorteilhaft ist hier, dass, aufgrund der zeitlichen "Nähe" der Vorbehandlung sowohl zum vorgelagerten Spritzgießprozess als auch zum nachgelagerten Prägeprozess die vorbehandelte Oberfläche besonders "zugänglich" für die durchgeführten Bearbeitungsverfahren ist und eine Degeneration - durch die zeitliche Nähe - weitgehend vermieden wird. Damit wird die Effektivität der Vorbehandlung deutlich erhöht, und beispielsweise die Hafteigenschaften zwischen Grundkörper und den ein oder mehreren ersten Folienelementen und/oder der Deckschicht verbessert.

Vorzugsweise wird eine optische Prüfung der Oberfläche des Grundkörpers und/oder der ein oder mehreren ersten Folienelemente und/oder der Bedruckung und/oder des Bauteils durchgeführt. Diese erfolgt insbesondere mittels eines optischen Sensors, beispielsweise einer Kamera: Eine derartige optische Prüfung wird hierbei vorzugsweise unter Einsatz von Bildverarbeitungsverfahren durchgeführt und kann beispielsweise dazu verwendet werden, um Prozessparameter beispielsweise durch Einbindung in einen entsprechenden Regelkreis zu optimieren, um so die Ausschussraten weiter zu verringern. Weiter kann diese optische Prüfung auch zur Qualitätssicherung eingesetzt werden. Diese optische Prüfung kann mehrfach zu unterschiedlichen Zeitpunkten des Prozesses stattfinden, beispielsweise nach dem Spritzgussvorgang und /oder nach der Vorbehandlung und/oder nach der Applikation der einen oder mehreren Folienelemente und/oder nach dem Bedrucken und/oder nach der weiteren Beschichtung, Überflutung, Überspritzung und/oder nach einem Reinigungsprozess und/oder nach der Entnahme des Bauteils aus der ersten Werkzeugkavität.

Vorzugsweise wird insbesondere nach der Durchführung des Schritts d), d.h. dem Applizieren der ein oder mehreren ersten Folienelemente und/oder nach Durchführung des Schritts, bei dem die Deckschicht aufgebracht wird, und/oder nach dem Bedrucken ein Reinigungsprozess durchgeführt. Durch diesen Prozess wird beispielsweise die freiliegende Oberfläche von Abfallprodukten des Prägeprozesses gereinigt. Vorzugsweise wird hier der Reinigungsprozess durchgeführt, so lange sich der Grundkörper noch in der ersten Werkzeugformhälfte befindet. Hierdurch wird der Grundkörper bei der Durchführung der Reinigung sicher fixiert, so dass auch Reinigungsverfahren eingesetzt werden können, welche eine stabile Fixierung des zu reinigenden Produkts erfordern.

Vorzugsweise erfolgt hierbei die Reinigung mittels Bürsten und/oder Druckluft und/oder Absaugung.

Vorzugsweise wird die erste Werkzeugformhälfte zwischen der Durchführung der Schritte b) und d), d.h. dem Spritzen des Grundkörpers und dem Abprägen der ein oder mehreren ersten Folienelemente, und/oder vor dem Schritt des Bedruckens gedreht und/oder verschoben, um eine entsprechende Bearbeitung der freiliegenden Oberfläche des Grundkörpers, beispielsweise durch eine Prägeeinheit und/oder eine Druckeinheit, zu ermöglichen.

Weiter ist es jedoch auch möglich, die erste Werkzeugformhälfte ortsfest zu belassen und beispielsweise eine auf einem Roboterarm angeordnete Prägeeinheit zu verfahren, so dass mittels dieser ein Abprägen der ein oder mehreren Folienelemente auf die freiliegende Oberfläche des Grundkörpers ermöglicht wird.

Vorzugsweise erfolgt auch bei der Durchführung der weiteren oben beschriebenen Bearbeitungsschritte jeweils ein Verschieben und/oder ein Verdrehen der ersten Werkzeugformhälfte derart, dass der Grundkörper entsprechend durch eine dem jeweiligen Bearbeitungsschritt zugeordnete Station bearbeitet werden kann. So ist es vorteilhaft, dass eine Spritzgießvorrichtung mit mehreren Stationen vorgesehen wird, zwischen denen die erste Werkzeugformhälfte, beispielsweise durch Verschieben und/oder Verdrehen, verschoben wird, um entsprechend dem vorgegebenen Verfahrensablauf den Grundkörper gemäß den oben beschriebenen Bearbeitungsschritten zu bearbeiten.

Die Spritzgießvorrichtung weist neben zumindest einer ersten Spritzgießstation und zumindest einer Prägestation weiter eine oder mehrere der folgenden Stationen auf:
Zumindest eine Station, zumindest eine zweite Spritzgießstation, zum Aufbringen der Deckschicht aus einem zweiten Kunststoffmaterial, mittels Überfluten . Die zumindest eine zweite Spritzgießstation weist hierbei vorzugsweise jeweils eine Schließvorrichtung zur Ausbildung der zweiten Spritzgusskavität mittels der ein oder mehreren dritten Werkzeugformhälften auf, insbesondere durch Abdichten der ein oder mehreren dritten Werkzeugformhälften gegen den Grundkörper, die ein oder mehreren ersten Folienelemente und/oder die erste Werkzeugformhälfte. Weiter weist die zumindest eine zweite Spritzgussstation hierzu vorzugsweise eine Spritzeinheit zum Einbringen des zweiten Kunststoffmaterials in die zweite Spritzgusskavität auf. Diesbezüglich wird auf obige Ausführungen verwiesen.

Zumindest eine Druckstation insbesondere zum Bedrucken der ein oder mehreren ersten Folienelemente und/oder des freiliegenden ersten Teilbereichs der Oberfläche des Grundkörpers in zumindest einem weiteren Teilbereich, wobei der Grundkörper konturfolgend in der ersten Werkzeugkavität der ersten Werkzeughälfte verbleibt und insbesondere die erste Werkzeugformhälfte als Bedruckhalterung für das Bedrucken der ein oder mehreren Folienelemente und/oder des freiliegenden ersten Teilbereichs der Oberfläche des Grundkörpers in dem zumindest einen weiteren Teilbereich dient. Vorteilhafterweise handelt es sich bei der zumindest einen Druckstation um eine Digitaldruckstation, bevorzugt Tintenstrahldruckstation bzw. Inkjetdruckstation, und/oder Tampondruckstation.

Zumindest eine Vorbehandlungsstation zur Vorbehandlung insbesondere eines Teilbereichs der freiliegenden Oberfläche des Grundkörpers: Diese Vorbehandlungsstation führt hierbei vorzugsweise die bereits oben beschriebenen ein oder mehreren Bearbeitungsverfahren durch, die insbesondere ausgewählt sind aus: Begasung, Beflammung, Plasmabehandlung, Fluorierung, Bestrahlung, Reinigung, Oberflächenaktivierung, Beschichtung.

Ein oder mehrere Prüfstationen, insbesondere zur optischen Prüfung der Oberfläche des Grundkörpers, der ein oder mehreren ersten Folienelementen und/oder des Bauteils: Die Prüfung kann hierbei, wie bereits oben ausgeführt, insbesondere mittels optischer Sensoren, insbesondere einer Kamera, erfolgen.

Eine Reinigungsstation, insbesondere zur Reinigung der Oberfläche des Bauteils mittels Bürsten und/oder Druckluft und/oder Absaugung. Auch diesbezüglich wird auf die obigen Ausführungen zum Reinigungsschritt verwiesen.

Eine Entformungsstation zum Entformen des Bauteils umfassend den Grundkörper, die ein oder mehreren ersten Folienelemente, sowie ggf. die ein oder mehreren zweiten Folienelemente und/oder die Deckschicht aus der ersten Werkzeugformhälfte. In der Entformungsstation kann weiter auch eine entsprechende Abkühlung und Aushärtung des Bauteils vor der Entformung durchgeführt werden.

Das Verfahren der ersten Werkzeugformhälfte wird hierbei vorzugsweise dadurch realisiert, dass die erste Werkzeugformhälfte auf einem beweglich gelagerten Werkzeugträger angeordnet ist und insbesondere mit diesem fest verbunden ist. Bei diesem Werkzeugträger handelt es sich vorzugsweise um einen vertikal oder horizontal angeordneten Drehteller oder Schiebetisch. Vorzugsweise ist die mindestens eine erste Werkzeugformhälfte auf diesem Drehteller oder Schiebetisch befestigt. Der Drehteller und/oder Schiebetisch ist weiter entsprechend beweglich gelagert, dass die erste Werkzeugformhälfte zwischen den Stationen, insbesondere zwischen der ersten Spritzgießstation und der Prägestation und/oder der zumindest einen Druckstation, verfahrbar ist.

Vorzugsweise weist die Spritzgießvorrichtung hierbei nicht nur eine erste Werkzeugformhälfte, sondern zwei oder mehrere erste Werkzeugformhälften auf, die auf einem gemeinsamen Werkzeugträger angeordnet sind. Hierdurch ist es möglich, die Effektivität der Herstellungsverfahren, sowie den Nutzungsgrad der einzelnen Stationen deutlich zu erhöhen. Werden beispielsweise zwei erste Werkzeugformhälften auf einem gemeinsamen Werkzeugträger angeordnet, so kann während der Durchführung des Abprägens in der Prägestation bereits parallel ein neuer Grundkörper in der ersten Spritzgussstation spritzgegossen werden und hierdurch entsprechend eine Verdoppelung des Nutzungsgrads erzielt werden.

Vorzugsweise werden hierbei auf dem gemeinsamen Werkzeugträger einer Spritzgießvorrichtung mit einer Anzahl von n Stationen zumindest n erste Werkzeugformhälften angeordnet. Weist die Spritzgießvorrichtung so beispielsweise eine erste Spritzgießstation, eine Prägestation, eine zweite Spritzgießstation und eine Entformungsstation auf, werden zumindest vier Werkzeugformhälften auf dem gemeinsamen Werkzeugträger vorgesehen. Die vier Bearbeitungsschritte, welche von diesen vier Stationen durchgeführt werden, können so jeweils parallel durchgeführt werden, wodurch der Nutzungsgrad entsprechend verbessert wird.

Die Spritzgießvorrichtung weist vorzugsweise weiter eine Stellvorrichtung zum Verfahren der ersten Werkzeugformhälfte oder insbesondere auf einem gemeinsamen Werkzeugträger angeordneter Werkzeugformhälften zwischen den Stationen der Spritzgießvorrichtung auf. Diese Stellvorrichtung kann hierbei durch einen entsprechenden Servo-Antrieb und/oder einen hydraulischen Antrieb und/oder einen pneumatischen Antrieb bereitgestellt werden. Vorzugsweise wird dieses Stellvorrichtung von einer Prozesssteuervorrichtung angesteuert, welche die ein oder mehreren ersten Werkzeugformhälften zyklisch in einer vordefinierten Abfolge zwischen den zwei oder mehreren Stationen der Spritzgießvorrichtung verfährt und den jeweiligen Stationen zur Bearbeitung zuführt.

Im Folgenden wird die Erfindung anhand von mehreren Ausführungsbeispielen unter Zuhilfenahme der beiliegenden Zeichnungen beispielhaft erläutert.
- Fig. 1a - Fig.1f: verdeutlicht anhand von mehreren schematischen Darstellungen die Durchführung eines Verfahrens zur Herstellung eines Bauteils.
- Fig. 2a, Fig. 2b: zeigen schematische Darstellungen zur Verdeutlichung weiterer Verfahrensschritte eines Verfahrens zur Herstellung eines Bauteils.
- Fig. 3: zeigt eine Schnittdarstellung eines Bauteils.
- Fig. 4a, Fig. 4b: verdeutlicht jeweils eine schematische Darstellung einer Spritzgießvorrichtung zur Herstellung eines Bauteils.
- Fig. 5: zeigt eine schematische Darstellung einer Spritzgießvorrichtung zur Herstellung eines Bauteils.
- Fig. 6: zeigt eine schematische Darstellung einer Spritzgießvorrichtung zur Herstellung eines Bauteils.

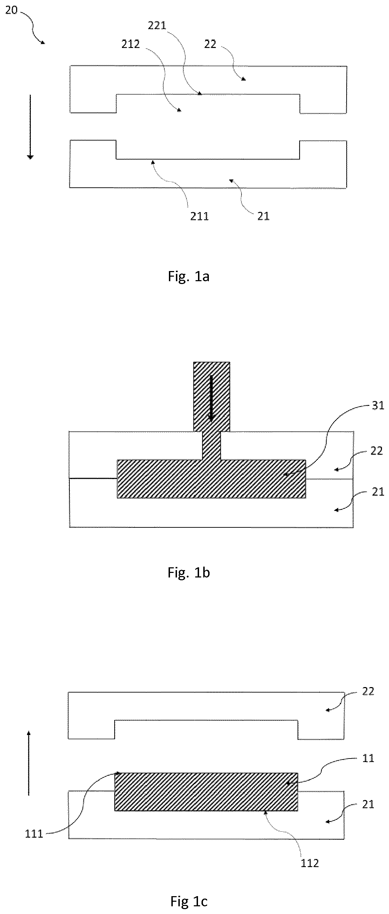

Anhand der Figuren 1a bis Fig. 1f wird im Folgenden ein Verfahren zur Herstellung eines Bauteils beschrieben:
Fig. 1a zeigt eine erste Werkzeugformhälfte 21 und eine zweite Werkzeugformhälfte 22 eines Spritzgusswerkzeugs 20.

Die erste Werkzeugformhälfte 21 weist eine erste Werkzeugkavität 201 und die zweite Werkzeugformhälfte 22 eine zweite Werkzeugkavität 221 auf, welche beim Schließen des Spritzgusswerkzeugs 20 gemeinsam eine Spritzgusskavität 212 ausbildet. Das Spritzgusswerkzeug 20 ist Teil einer Spritzgießvorrichtung 40, welche weiter vorzugsweise noch weitere, hier nicht gezeigte Bauteile aufweist, insbesondere eine Schließvorrichtung zum Öffnen und Schließen des Spritzgusswerkzeugs 20, sowie eine Spritzeinheit zum Einbringen eines Kunststoffmaterials in die erste Spritzgusskavität 212.

In dem in Fig. 1a verdeutlichten Schritt wird das Spritzgusswerkzeug 20 geschlossen und so die von den beiden Werkzeugformhälften 21, 22 bestimmte erste Spritzgusskavität 211 ausgebildet.

Hierbei ist es weiter auch möglich, dass vor dem Schließen des Spritzgusswerkzeugs 20 in die Spritzgusskavität 212 ein Folienelement eingebracht wird.

Bei diesem Folienelement, im Folgenden als zweites Folienelement bezeichnet, handelt es sich vorzugsweise
- entweder um eine vorzugsweise in teilflächiger Form, beispielsweise als "Label" ausgebildete Laminierfolie
- oder um ein sogenanntes "Insert" als ein insbesondere mit Dekorations- und/oder Funktionselementen versehenes, vorgeformtes Teilelement oder um ein Einlegeteil insbesondere als funktionelles Verstärkungs- oder Versteifungselement aus Metall und/oder Kunststoff und/oder Faserverbundstoff und/oder Kunststoff mit Faserkomponenten
- oder um eine Transferfolie, welche, wie eingangs erläutert, vollflächig in die untere Werkzeugformhälfte 21 eingebracht wird.

Hierzu kann weiter vorgesehen sein, dass die untere, zweite Werkzeugformhälfte 22 entsprechende Ausnehmungen in ihrer Werkzeugkavität zur Führung dieser ein oder mehreren zweiten Folienelemente während des Spritzgussprozesses aufweist, sowie entsprechende Haltevorrichtungen am Spritzgusswerkzeug vorgesehen sind, um die ein oder mehreren zweiten Folienelemente während des nachfolgenden Spritzguss-Schrittes zu fixieren.

Vorzugsweise werden die ein oder mehreren zweiten Folienelemente hierbei in die erste Werkzeugformhälfte eingelegt, derart, dass sich eine erste Oberfläche der ein oder mehreren zweiten Folienelemente in direktem Kontakt mit der Oberfläche der ersten Werkzeugkavität 211 befindet. Hierdurch wird bewirkt, dass die ein oder mehreren zweiten Folienelemente die untere Oberfläche oder einen Teil der unteren Oberfläche des Bauteils ausbilden und dort ihre funktionelle und/oder dekorative Wirkung entfalten.

Es ist jedoch auch möglich, dass die ein oder mehreren zweiten Folienelemente durch entsprechende Haltemittel beabstandet zur ersten Werkzeugformhälfte 21 in der ersten Spritzgusskavität 212 positioniert werden, so dass diese dann mit dem Kunststoffmaterial umspritzt werden.

In einem nächsten Schritt wird sodann, wie in Fig. 1b verdeutlicht, ein erstes Kunststoffmaterial 31 in die erste Spritzgusskavität 212 eingebracht und hierdurch ein Grundkörper 11 spritzgegossen.

Als erstes Kunststoffmaterial 31 wird hierbei vorzugsweise ein thermoplastischer Kunststoff, vorzugsweise aus ABS, ASA, ABS-PC, PC, PC-PPT, ASA-PC, verwendet. Dieser Kunststoff wird sodann im flüssigen Zustand in die erste Spritzgusskavität 212 eingespritzt.

Anschließend wird, wie in Fig. 1c gezeigt, das Spritzgusswerkzeug 20 geöffnet.

Hierzu wird vorzugsweise die zweite Werkzeugformhälfte 22 translatorisch nach oben verfahren und somit die durch die zweite Werkzeugkavität 221 in ihrer Oberflächenform bestimmte obere Oberfläche des Grundkörpers 1 freigelegt. Hierbei ist der Zeitabschnitt zwischen dem Eindringen des ersten Kunststoffmaterials 31 gemäß Fig. 1b und dem Öffnen des Spritzgusswerkzeugs 20 gemäß Fig. 1c so gewählt, dass das erste Kunststoffmaterial 31 durch Abkühlung und/oder Vernetzung von dem flüssigen Zustand in einen festen Zustand übergegangen ist. Vorzugsweise ist zu diesem Zeitpunkt jedoch das erste Kunststoffmaterial noch nicht vollständig abgekühlt und/oder vernetzt, wie im Folgenden auch noch näher ausgeführt.

Wie in Fig. 1c gezeigt, verbleibt beim Öffnen des Spritzgusswerkzeugs 20 der Grundkörper 11 konturfolgend in der ersten Werkzeugkavität 211 der ersten Werkzeugformhälfte 21. Damit wird lediglich ein erster Teilbereich 111 der Oberfläche des Grundkörpers 11 freigelegt. Ein zweiter Teilbereich 112 der Oberfläche des Grundkörpers 11 verbleibt jedoch noch in der ersten Werkzeugformhälfte. Es findet damit noch keine vollständige Entformung des Grundkörpers 11 zu diesem Zeitpunkt statt.

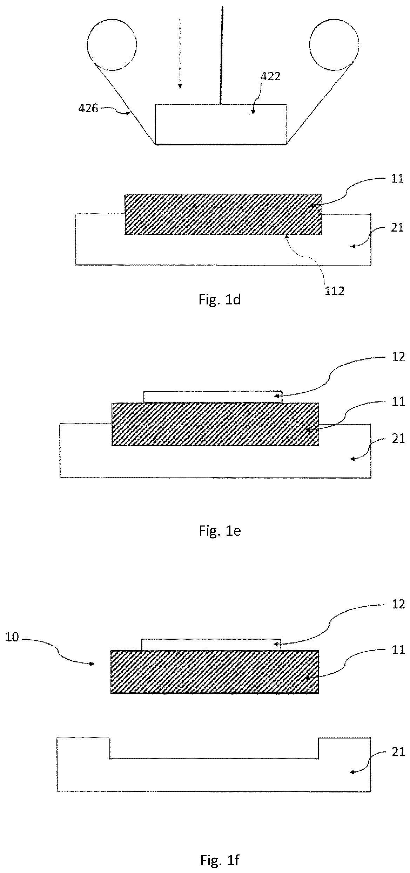

Anschließend werden, wie in den Figuren Fig. 1d und Fig. 1e angedeutet, ein oder mehrere erste Folienelemente 12 auf zumindest einen Teilbereich des freiliegenden ersten Teilbereichs 111 der Oberfläche des Grundkörpers 11 abgeprägt.

Bei diesem Abprägen verbleibt der Grundkörper 11 konturfolgend in der ersten Werkzeugkavität 211 der ersten Werkzeugformhälfte 21. Die erste Werkzeugformhälfte 21 dient so als Prägeaufnahme für das Abprägen der ein oder mehreren ersten Folienelemente 12.

Das Abprägen der ein oder mehreren ersten Folienelemente 12 wird bevorzugt mittels ein oder mehreren Prägewerkzeugen 422 durchgeführt, welche eine Folie 426, oder einen oder mehrere Ausschnitte der Folie 426 als erstes Folienelemente 12 auf die freiliegende Oberfläche oder einen Teilbereich der freiliegenden Oberfläche des Grundkörpers 11 applizieren.

Wie in Fig. 1d angedeutet, wird beim Abprägen die zwischen einem Prägewerkzeug 422 und der freiliegenden Oberflächen des Grundkörpers 11 angeordnete Folie 426 vollflächig oder bereichsweise gegen mindestens einen Teilbereich der freiliegenden Oberfläche des Grundkörpers 11 gepresst. Der Prägedruck wird zwischen dem Prägewerkzeug 422 und der ersten Werkzeugformhälfte 21 als Prägeaufnahme aufgebaut. Wie bereits oben ausgeführt, wird aufgrund der konturfolgenden Ausbildung der ersten Werkzeugkavität 211 zum Grundkörper 11 hierbei für den Grundkörper 11 eine exakt passende Prägeaufnahme bereitgestellt, so dass ein konstanter Prägedruck über die gesamten freiliegenden Oberflächen des Grundkörpers 11 aufrechterhalten werden kann und somit die erforderlichen Toleranzen auch exakt eingehalten werden können.

Das Abprägen der ein oder mehreren Folienelemente 11 erfolgt hierbei vorzugsweise mittels Abrollprägen, partiellem Abrollprägen oder Hubprägen. Entsprechend ist das Prägewerkzeug 422 als Prägewalze bzw. Prägestempel ausgebildet.

Anstelle von einem Prägewerkzeug können auch unterschiedliche Prägewerkzeuge bzw. unterschiedliche Prägeverfahren verwendet werden, welche parallel oder nacheinander ein oder mehrere der ersten Folienelemente 12 auf die freiliegende Oberfläche des Grundkörpers 11 abprägen. Hierbei können auch im Weiteren jeweils gleichartige oder unterschiedliche Folien 426 eingesetzt werden.

Als Folie 426 werden bevorzugt Transferfolien, insbesondere Heißprägefolien oder Kaltprägefolien, sowie Laminierfolien eingesetzt.

Transferfolien weisen hierbei bevorzugt eine Trägerlage, sowie eine von dieser ablösbare Transferlage auf. Die Trägerlage besteht vorzugsweise aus einer Kunststofffolie, insbesondere aus einer PET-Folie einer Schichtdicke zwischen 10 µm und 250 µm. Hierauf folgt bevorzugt eine Ablöseschicht, welche vorzugsweise aus einem Wachs und/oder aus Polymeren besteht. Die Aufgabe der Ablöseschicht ist, das Ablösen der Transferlage unter den Bedingungen des Abpräge-Verfahrens zu ermöglichen. Auf die Ablöseschicht kann hierbei auch verzichtet werden, wenn die aneinander angrenzenden Materialschichten der Trägerlage und der Transferlage entsprechend zueinander formuliert sind.

Die Transferlage weist, wie bereits oben ausgeführt, jeweils vorzugsweise eine oder mehrere Dekorschichten und/oder eine oder mehrere funktionelle Schichten auf. Diesbezüglich wird auf obige Ausführungen verwiesen. Optional kann je nach dem eingesetzten Abpräge-Verfahren die Transferfolie über eine Kleberschicht verfügen oder auch nicht verfügen. So weist die Transferfolie bei ihrer Ausgestaltung als Heißprägefolie vorzugsweise an ihrer Unterseite eine Kleberschicht auf, welche aus einem thermisch aktivierbaren und/oder thermisch vernetzbaren Kleber, im einfachsten Fall einem Heißsiegelkleber, besteht. In ihrer Ausgestaltung als Laminierfolie weist die Folie 426 eine Trägerlage, insbesondere eine Kunststofffolie einer Schichtdicke zwischen 15 µm und 125 µm auf, welche in den applizierten ersten Folienelementen 12 verbleibt. Idealerweise weist die Folie noch eine oder mehrere Dekorschichten und/oder funktionelle Schichten und optional eine Kleberschicht auf, entsprechend der Ausgestaltung der Transferlage einer Transferfolie. Diesbezüglich wird auf obige Ausführungen hierzu verwiesen.

Im Weiteren ist es vorteilhaft, wenn die Transferlage der Transferfolie an ihrer der Trägerlage zugewandten Seite noch eine oder mehrere Schutzschichten aufweist. Entsprechend ist es weiter auch vorteilhaft, wenn die Folie 426 in ihrer Ausgestaltung als Laminierfolie auf ihrer von der freiliegenden Oberfläche des Grundkörpers 11 abgewandten Seite über eine oder mehrere Schutzschichten verfügt.

Diese Schutzschichten weisen hierbei vorzugsweise eine oder mehrere Schichten auf, welche mittels Vernetzung härtbar, insbesondere nachhärtbar, sind. Hierzu wird vorzugsweise nach Durchführung des Abprägens der ein oder mehreren ersten Folienelemente in einem nachfolgenden Schritt eine entsprechende Nachhärtung, beispielsweise durch Bestrahlung mittels UV-Licht, bewirkt. Ein Nachhärten kann hierbei weiter auch durch thermische Nachhärtung erfolgen. Durch die Verwendung derartiger Schutzschichten wird der Schutz der ersten Folienelemente 12, sowie des Grundkörpers 11 vor Umwelteinflüssen noch deutlich verbessert.

Erfindungsgemäß ist die Folie 426 als Heißprägefolie ausgebildet und es wird beim Abprägen ein durch die Formgebung des Prägewerkzeug 422 bestimmter Ausschnitt der Transferlage der Heißprägefolie gegen einen Ausschnitt der freiliegenden Oberfläche des Grundkörpers 11 gepresst. Das Prägewerkzeug 422 ist hierbei vorzugsweise beheizt, so dass in den durch die Formgebung des Prägewerkzeugs bestimmten Ausschnitt eine Kleberschicht der Transferlage oder eine zwischen dem Grundkörper 11 und der Transferlage vorgesehene Kleberschicht durch den dort erhöhten Druck/Temperatur aktiviert wird und somit im Bereich dieses Ausschnitts die Transferlage der Heißprägefolie mit der Oberfläche des Grundkörpers 11 verklebt wird. Hierbei ist es auch möglich, auf eine Beheizung des Prägewerkzeugs 422 zu verzichten, wenn das Abprägen gemäß Fig. 1d entsprechend zeitnah nach dem Spritzgießen gemäß Fig. 1b erfolgt und damit der Grundkörper 11 noch über eine entsprechend hohe Oberflächentemperatur verfügt.

Optional kann auch vorgesehen sein, die Heißprägefolie vor deren Applikation mit einer Heizeinrichtung vorzuheizen.

Die zeitliche Abfolge des Spritzgießen gemäß Fig. 1b, sowie der Schritte nach Fig. 1d und Fig. 1e wird so gesteuert, dass beim Abprägen der ein oder mehreren Folienelemente 12 der Grundkörper 11 nur teilweise abgekühlt ist, insbesondere noch eine mittlere Oberflächentemperatur im ersten Teilbereich 111 der Oberfläche zwischen 20°C und 120°C, insbesondere zwischen 40°C und 100°C, vorzugsweise zwischen 50°C und 80°C, aufweist. Nach Aktivierung der Kleberschicht wird die Heißprägefolie wieder abgezogen und hierbei die Trägerlage, sowie die Bereiche der Transferlage, in denen die Kleberschicht nicht aktiviert worden ist, wieder abgezogen. Damit verbleiben als erste Folienelemente 12 die Bereiche der Transferlage der Heißprägefolie auf dem Grundkörper 11, in welchem die Kleberschicht durch das Prägewerkzeug 422 aktiviert worden ist.

Vorzugsweise kann hierauf folgend noch eine Nachhärtung der Kleberschicht und/oder weiterer Schichten der Transferlage durchgeführt werden.

Bei Verwendung einer Kaltprägefolie als Folie 426 wird auf die Transferlage der Kaltprägefolie und/oder auf die freiliegenden Oberflächen des Grundkörpers 11 eine Kleberschicht in einem ersten Bereich aufgebracht, in einem zweiten Bereich jedoch nicht aufgebracht. Die Kleberschicht wird vorzugsweise mittels eines digitalen Druckverfahrens, insbesondere eines Inkjet-Druckkopfes, aufgedruckt. Mittels des Prägewerkzeugs 422 wird sodann die Kaltprägefolie gegen die Oberfläche des Grundkörpers 11 geführt, die Kleberschicht aktiviert und die Kaltprägefolie wieder abgezogen. Hierdurch wird ein durch die Formgebung des ersten Bereichs bestimmter Ausschnitt der Transferlage als erstes Folienelement 12 auf der freiliegenden Oberfläche des Grundkörpers 11 appliziert. Die Aktivierung der Kleberschicht erfolgt hierbei vorzugsweise mit Bestrahlung mit energiereicher elektromagnetischer Strahlung, beispielsweise mittels UV-Strahlung mittels UV-LEDs. Der Vorteil dieses Verfahrens besteht darin, dass das Prägewerkzeug 422 nicht individuell gefertigt werden muss, sondern lediglich ein entsprechendes Aufpressen der Transferfolie in einem vorbestimmten Teilbereich der Oberfläche des Grundkörpers durchgeführt werden muss.

Weiter ist es auch möglich, dass die Transferlage der Transferfolie mittels Ausnehmungen strukturiert ist, welche den Umrissen des zu transferierenden Ausschnitts und damit den Umrissen der ein oder mehreren ersten Folienelemente 12 entsprechen.

Weiter ist es auch möglich, dass die Transferlage bereits in Form von vorgeformten Folienelementen ausgebildet ist, die beim Prägen entsprechend auf die vorbestimmten Bereiche der freiliegenden Oberfläche des Grundkörpers 11 kaschiert werden. Im Weiteren ist es auch möglich, dass die Folie bereits in Form der auszubildenden ein oder mehreren ersten Folienelemente 12 dem Prägewerkzeug 422 zugeführt wird und von diesem sodann auf die vorbestimmten Bereiche der freiliegenden Oberflächen des Grundkörpers 11 appliziert werden, ohne dass es hier noch weiterer Maßnahmen bedarf.

Wie bereits oben ausgeführt, kann das Abprägen der ein oder mehreren Folienelemente hierbei auch mehrfach hintereinander unter Einsatz unterschiedlicher Folien 426 durchgeführt werden, so dass die ein oder mehreren ersten Folienelemente 12 nicht überlappend oder teilweise überlappend oder vollständig überlappend zueinander vorgesehen sind. Zur entsprechenden registergenauen Aufprägung der Folienelemente 12 ist es hierbei vorteilhaft, entsprechende Registermarken und/oder optische Merkmale auf der Folie 426 bzw. den ein oder mehreren ersten Folienelementen 12 zu erfassen, um ein entsprechendes registergenaues Applizieren der ein oder mehreren ersten Folienelemente zueinander zu erzielen.

Werden, wie bereits oben ausgeführt, hier optional noch ein oder mehrere zweite Folienelemente bei Durchführung des Spritzgießens in die erste Spritzgusskavität 212 eingeführt, so ist es vorteilhaft, die ein oder mehreren ersten Folienelemente weiter auch registergenau zu diesen ein oder mehreren zweiten Folienelementen abzuprägen. Hierzu können zusätzlich eine oder mehrere Registermarken oder optische Merkmale der ein oder mehreren zweiten Folienelement erfasst werden. Weiter ist hier von besonderem Vorteil, dass die Positionierung der ein oder mehreren zweiten Folienelemente durch die erste Werkzeugformhälfte 21 maßgeblich beeinflusst wird und die erste Werkzeugformhälfte 21 die Prägeaufnahme für den Prägeprozess darstellt, d.h. die ein oder mehreren zweiten Folienelemente entsprechend registergenau zur Prägeaufnahme angeordnet sind.

In einem nächsten Schritt erfolgt sodann, wie in Fig. 1f dargestellt, ein Entformen des Bauteils 10, welches den Grundkörper 11 und die ein oder mehreren ersten Folienelemente 12 umfasst, aus der ersten Werkzeugformhälfte 21.

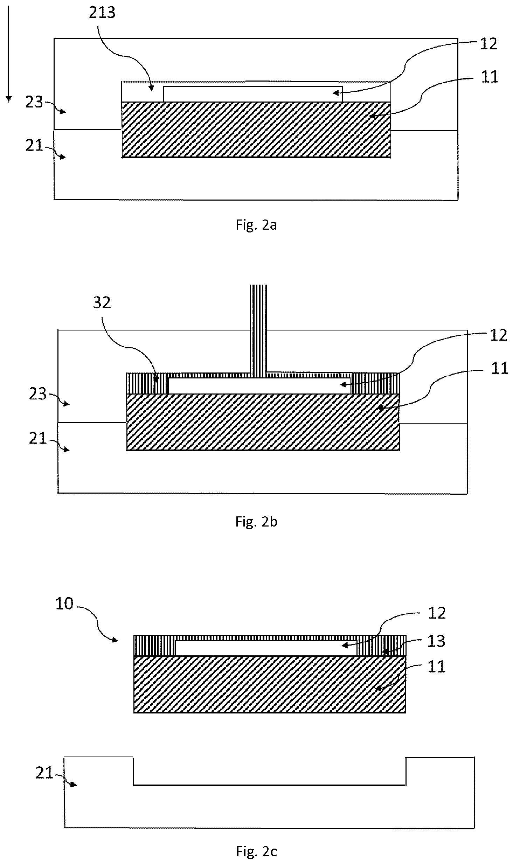

Weiter ist es möglich, dass neben den vorgehend erläuterten Schritten bei dem Verfahren noch weitere Schritte durchgeführt werden. Besonders vorteilhaft ist es hier, dass noch folgende weitere Schritte hierzu durchgeführt werden:
So kann nach Abprägen der ein oder mehreren ersten Folienelemente 12 und vor Entformung gemäß Fig. 1f noch ein- oder mehrfach der Schritt ausgeführt werden, dass eine Deckschicht 13 aus einem zweiten Kunststoffmaterial 32 aufgebracht wird. Zur Durchführung dieses Schritts wird hierbei vorzugsweise vorgegangen, wie in den Figuren Fig. 2a bis Fig. 2c verdeutlicht:
So verbleibt bei diesem Schritt der Grundkörper 11 konturfolgend in der ersten Werkzeugkavität 211 der ersten Werkzeugformhälfte 21. Weiter wird eine zweite Spritzgusskavität 213 mittels einer oder mehrere dritter Werkzeugformhälften 23 ausgebildet. Hierzu wird, wie in Fig. 2a verdeutlicht, beispielsweise ein Spritzgusswerkzeug, gebildet aus der ersten Werkzeugformhälfte 21 und der dritten Werkzeugformhälften 23, geschlossen, und zwar derart, dass die dritte Werkzeugformhälfte 23, gegen den Grundkörper 11, die ein oder mehreren ersten Folienelemente 12 und/oder die erste Werkzeugformhälfte 21 abdichtet.

Sodann wird, wie in Fig. 2b verdeutlicht, das zweite Spritzgussmaterial 32 in die zweite Spritzgusskavität 213 eingebracht.

Das zweite Kunststoffmaterial 32 besteht vorzugsweise aus einem thermoplastischen Kunststoffmaterial, aus einem durch Vernetzung aushärtbaren Kunststoffmaterial, insbesondere einem Zweikomponenten-Material, einem thermisch und/oder durch Strahlung härtbaren Material und/oder einer Mischung solcher Kunststoffmaterialien.

Besonders bevorzugt besteht das zweite Kunststoffmaterial hierbei aus einem durch Vernetzung aushärtenden Kunststoffmaterial, insbesondere aus Polyurethan oder Polyurea. Hierdurch kann eine besonders witterungsbeständige "Schutzschicht" für die ein oder mehreren ersten Folienelemente 12 bereitgestellt werden.

Weiter ist es vorteilhaft, wenn die ein oder mehreren ersten Folienelemente 12 an ihrer zur Deckschicht 13 weisenden Oberseite noch über eine entsprechende, auf das zweite Kunststoffmaterial 32 abgestimmte Haftvermittlungsschicht verfügen und/oder das zweite Kunststoffmaterial 32 in einem nachfolgenden Härteschritt noch nachgehärtet wird, um einen besonders gut haftenden Schichtverbund, sowie eine besonders witterungsbeständige Oberseite des Bauteils 10 zu erzielen.

Beim Entformen weist der Grundkörper 11 damit, wie in Fig. 2c verdeutlich, neben dem Grundkörper 11 und den ein oder mehreren Folienelementen 12 weiter noch die Deckschicht 13 auf.

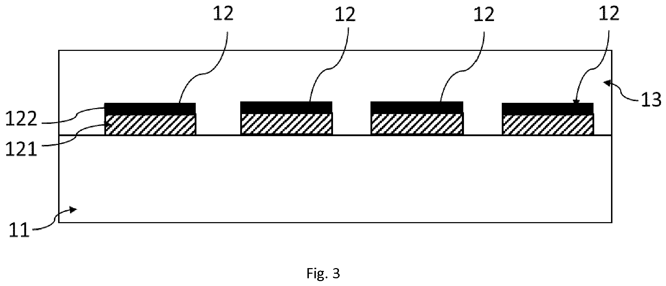

In Fig. 3 ist ein Beispiel des Schichtaufbaus des hierdurch hergestellten Bauteils 10 verdeutlicht:
Auf den Grundkörper 11 sind die ein oder mehreren ersten Folienelemente 12 appliziert. Hierauf folgt die Deckschicht 13. Die ersten Folienelemente 12 weisen hierbei eine oder mehrere Dekorschichten und/oder funktionelle Schichten 121 auf, sowie eine Haftvermittlungsschicht 122, welche eine besonders gute Haftung zwischen der Deckschicht 13 und den einzelnen ersten Folienelementen 12 ermöglicht.

Wie bereits oben ausgeführt, kann das Aufbringen der Deckschicht 13 auch mehrmals wiederholt werden, und auch ein- oder mehrfach zwischen dem Abprägen von ein oder mehreren ersten Folienelementen 12 erfolgen.

Es ist vorteilhaft, wenn die Deckschicht 13 die ein oder mehreren ersten Folienelemente 12 vollflächig bedeckt und/oder die ein oder mehreren ersten Folienelemente 12 zwischen dem Grundkörper 11 und der Deckschicht 13 oder einer der Deckschichten 13 eingekapselt sind.

Je nach Anwendung kann es jedoch weiter vorteilhaft sein, dass die Deckschicht 13 die ein oder mehreren Folienelemente 12 und/oder den ersten Teilbereich 111 der Oberfläche des Grundkörpers 11 lediglich teilflächig überlappen und so beispielsweise noch weitere dekorative und/oder funktionelle Elemente bereitstellen.

Weitere vorteilhafte zusätzliche Schritte bei Durchführung des Verfahrens sind:
Vorbehandlung eines freiliegenden Teilbereichs der Oberfläche des Grundkörpers 11 und/oder der ein oder mehreren ersten Folienelemente 12, insbesondere durch ein oder mehrere Bearbeitungsverfahren ausgewählt aus: Begasung, Beflammung, Plasmabehandlung, Fluorierung, Behandlung, Reinigung, Oberflächenaktivierung, Beschichtung. Eine derartige Vorbehandlung wird vorzugsweise zwischen den in Fig. 1c und Fig. 1d erläuterten Verfahrensschritten durchgeführt, um die freiliegende Oberfläche des Grundkörpers 11 bzw. den Teilbereich der Oberfläche des Grundkörpers 11, auf welchen die ein oder mehreren ersten Folienelemente 12 appliziert werden, entsprechend vorzubehandeln, um eine besonders gute Haftfähigkeit zwischen dem Grundkörper 11 und den ein oder mehreren ersten Folienelemente 12 zu erzielen. Weiter können durch eine derartige Vorbehandlung auch zusätzliche dekorative Funktionen erzielt werden. Weiter kann eine derartige Vorbehandlung in dem Fall, in dem das Abprägen mehrfach hintereinander durchgeführt wird, zwischen den einzelnen Abprägeschritten durchgeführt werden oder vor Durchführung des in Fig. 2a verdeutlichten Schritts durchgeführt werden, um die Haftung zwischen dem zweiten Kunststoffmaterial 32 und dem Grundkörper 11 und/oder den ein oder mehreren ersten Folienelementen zu verbessern.

Bedrucken der ein oder mehreren ersten Folienelemente 12 und/oder des freiliegenden ersten Teilbereichs der Oberfläche des Grundkörpers 11 in zumindest einem weiteren Teilbereich, wobei der Grundkörper 11 konturfolgend in der ersten Werkzeugkavität 211 der ersten Werkzeughälfte 21 verbleibt und insbesondere die erste Werkzeugformhälfte 21 als Bedruckhalterung für das Bedrucken der ein oder mehreren Folienelemente 12 und/oder des freiliegenden ersten Teilbereichs der Oberfläche des Grundkörpers 11 in dem zumindest einen weiteren Teilbereich dient. Ein derartiges Bedrucken wird vorteilhafterweise nach dem in Fig. 1c gezeigten Verfahrensschritt, bevorzugt nach dem in Fig. 1e gezeigten Verfahrensschritt, durchgeführt. Hierbei ist es möglich, dass das Bedrucken mit einem Bedruckstoff, wie beispielsweise einer farbigen Tinte, derart erfolgt, dass der Bedruckstoff auf der freien Oberfläche der ein oder mehreren Folienelementen 12 und/oder neben den ein oder mehreren Folienelementen 12, insbesondere direkt auf dem Grundkörper, angeordnet ist. Zweckmäßigerweise stellt die Bedruckung, wie oben erläutert, in dem zumindest einem weiteren Teilbereich ein Dekor bzw. Designelement, bevorzugt ein farbiges Dekor bzw. Designelement, dar und wird weiter bevorzugt beispielsweise mittels Tintenstrahldruck erzeugt.

Optische Prüfung eines Teilbereichs der Oberfläche des Grundköpers 11 und/oder der ein oder mehreren ersten Folienelemente 12 und/oder des Bauteils 10. Diese optische Prüfung wird vorzugsweise mittels optischer Sensoren, beispielsweise einer Kamera, durchgeführt. Hierdurch kann, beispielsweise mittels eines Einsatzes von Bilderkennungs-Algorithmen, zum einen eine Qualitätssicherung durchgeführt werden und zum anderen auch eine Nachjustierung von Prozessparametern gesteuert werden. Eine derartige optische Prüfung wird vorzugsweise zwischen den in den Figuren Fig. 1c und Fig. 1d, Fig. 1e und Fig. 1f bzw. Fig. 1e und Fig. 2a verdeutlichen Schritten durchgeführt.

Reinigung, insbesondere der freiliegenden Oberfläche des Grundkörpers 1, der ein oder mehreren ersten Folienelemente 12 und/oder der Deckschicht 13. Eine derartige Reinigung kann insbesondere mittels Bürsten, Druckluft und/oder Absaugung realisiert werden. Besonders vorteilhaft ist hier, dass der Grundkörper 11 zu diesem Zeitpunkt noch in der ersten Werkzeugformhälfte 21 gehalten wird und damit entsprechend gut fixiert ist, um auch höhere mechanische Kräfte aufzunehmen, welche durch das Reinigungsverfahren eingebracht werden.

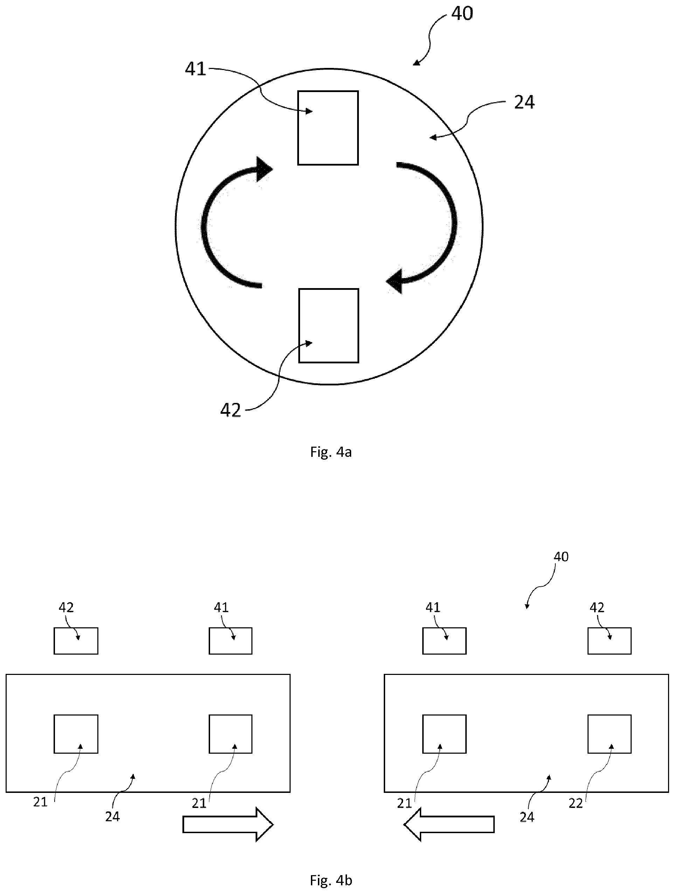

In Fig. 4a und Fig. 4b ist der Aufbau einer Spritzgießvorrichtung 40 zur Durchführung des vorgehend anhand der Figuren Fig. 1a bis Fig. 1f beschriebenen Verfahrens schematisch skizziert:
Die Spritzgießvorrichtung 40 nach Fig. 4a weist zumindest eine erste Spritzgießstation 41 sowie zumindest eine Prägestation 42 auf. Weiter weist die Spritzgießvorrichtung 40 einen beweglich gelagerten Werkzeugträger 24 auf, welcher in dem Ausführungsbeispiel nach Fig. 4a von einem horizontal angeordneten Drehteller gebildet wird, welcher, wie in Fig. 4a angedeutet, um die zentrale Achse drehbar gelagert ist.

Auf dem Werkzeugträger 24 sind ein oder mehrere erste Werkzeugformhälften 21 angeordnet, insbesondere fest mit diesem verbunden, so dass die ein oder mehreren ersten Werkzeugformhälften 21 durch Drehung des Werkzeugträgers 24 zyklisch der Spritzgießstation 41 und der Prägestation 42 zuführbar ist.

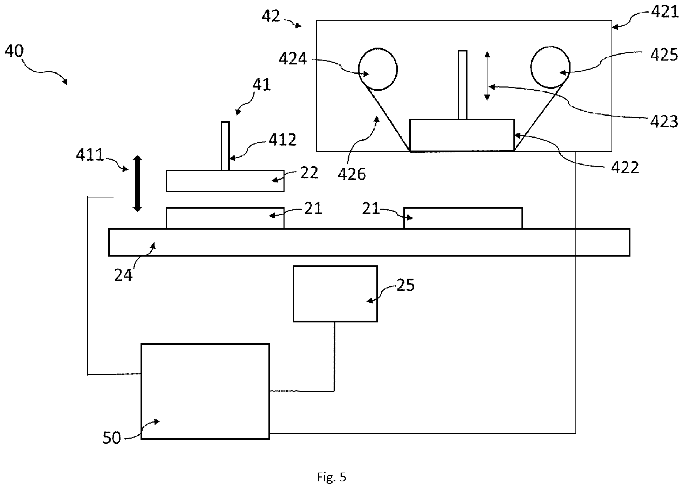

Fig. 5 verdeutlicht eine Ausführungsform der Spritzgießvorrichtung 40 nach Fig. 4a, bei der auf dem Werkzeugträger 24 zwei erste Werkzeugformhälften 21 montiert sind. Eine derartige Anordnung ist gegenüber der Anordnung lediglich einer Werkzeugformhälfte 21 auf dem Werkzeugträger 24 von Vorteil, da hierdurch die Produktionsgeschwindigkeit verdoppelt werden kann. Dies, da parallel zum Abprägen der ein oder mehreren ersten Folienelemente 12 auf den Grundkörper 11 bereits von der Spritzgießstation 41 wieder ein weiterer Grundkörper gegossen werden kann.

Die Spritzgießvorrichtung 40 gemäß Fig. 5 weist neben dem Werkzeugträger 24, den beiden ersten Werkzeugformhälften 21, der Spritzgießstation 41 und der Prägestation 42 noch eine Stellvorrichtung 25 zum Verfahren der auf dem gemeinsamen Werkzeugträger 24 angeordneten ersten Werkzeugformhälften 21 sowie eine Prozesssteuervorrichtung 50 auf.

Die Spritzgießstation 41 weist zumindest eine zweite Werkzeugformhälfte 22, eine Schließvorrichtung 411, sowie eine Spritzeinheit 412 auf. Die Schließvorrichtung 411 führt das Schließen des von der ersten Werkzeugformhälfte 21 und der zweiten Werkzeugformhälfte 22 in der Spritzgießstation 41 gebildeten Spritzgusswerkzeugs 20 aus, wodurch die erste Spritzgusskavität 212, wie auch anhand von Fig. 1a erläutert, ausgebildet wird. Weiter führt die Schließvorrichtung 411 auch das Öffnen des Spritzgusswerkzeugs 20 aus, wie vorgehend auch anhand von Fig. 1c erläutert. Die Schließvorrichtung 411 besteht hierbei vorzugsweise aus einer entsprechenden Führungsvorrichtung sowie hydraulischen und/oder pneumatischen Elementen, welche eine entsprechende translatorische Bewegung der zweiten Werkzeugformhälfte 22 zur ersten Werkzeugformhälfte 21 in der Spritzgießstation 41 ermöglichen.

Die Spritzeinheit 412 bringt, wie bereits oben anhand von Fig. 1b erläutert, das erste Kunststoffmaterial 31 in die erste Spritzgusskavität 212 ein. Die Spritzeinheit 412 verfügt hierzu über entsprechende Elemente, um das erste Kunststoffmaterial 31 entsprechend aufzuschmelzen und mit entsprechend hohem Druck in das Spritzgusswerkzeug 20 einzuspritzen.

Die Prägestation 42 weist eine Prägeeinheit 421 zum Abprägen der ein oder mehreren Folienelemente 12 auf zumindest einen Teilbereich der Oberfläche des Grundkörpers 11 auf. Die Prägeeinheit 421 führt damit die oben bereits anhand von Fig. 1d und Fig. 1e erläuterten Schritte aus.

Die Prägeeinheit 421 verfügt hierbei vorzugsweise über ein Prägewerkzeug 422, sowie eine Folienzuführungsvorrichtung 424 und eine Folienabführungsvorrichtung 425, welche die Folien 426 über das Prägewerkzeug 422 verfahren. Die Prägeeinheit 421 führt die bereits oben anhand der Figuren Fig. 1d und Fig. 1e erläuterten Schritte durch und ist, wie hierzu bereits oben beschrieben, ausgebildet. In dem Ausführungsbeispiel nach Fig. 5 wird hier das Prägewerkzeug 422 nach Art einer Hubpresse translatorisch gegen die Prägeaufnahme verfahren, welche von der ersten Werkzeugformhälfte 21 gebildet wird. Es ist jedoch, wie bereits oben beschrieben, auch möglich, dass es sich bei dem Prägewerkzeug 422 beispielsweise um eine Prägewalze oder um einen beweglich gelagerten Prägekopf handelt, welche durch Abrollen bzw. eine Abrollbewegung auf der ersten Oberfläche die ein oder mehreren ersten Folienelemente 12 appliziert.

Die Stellvorrichtung 25 ist vorzugsweise in Form eines Servomotors ausgebildet, welcher im Fall der Ausbildung des Werkzeugträgers 24 als horizontaler oder vertikaler Drehteller eine rotatorische Bewegung des Drehtellers bewirkt.

Die Prozesssteuervorrichtung 50 besteht aus einem oder mehreren Mikroprozessoren, peripheren Komponenten zur Steuerung der Spritzgießstation 41, der Prägestation 42 und der Stellvorrichtung 25, sowie über entsprechende Softwarekomponenten.

Diese Softwarekomponenten sind hierbei derart ausgestaltet, dass sie eine Ansteuerung der Spritzgießstation 41, der Prägestation 42 und der Stellvorrichtung 25 derart bewirken, dass das anhand der Figuren Fig. 1a bis Fig. 1c erläuterten Verfahren durchgeführt wird. So wird zunächst entsprechend die Spritzgießstation 41 und insbesondere die Schließvorrichtung 411 und die Spritzeinrichtung 41 angesteuert, um die in Fig. 1a bis Fig. 1c erläuterten Schritte durchzuführen. Sodann wird die Stellvorrichtung 25 angesteuert, den Werkzeugträger 24 um 180° zu drehen und somit die erste Werkzeugformhälfte 21 mit dem spritzgegossenen Grundkörper 11 der Prägestation 42 zuzuführen. Anschließend wird die Prägeeinheit 421 derart angesteuert, dass sie die in Fig. 1d und Fig. 1e erläuterten Verfahrensschritte durchführt und die ein oder mehreren ersten Folienelemente 12 auf den Grundkörper 11 abprägt.

Wie bereits oben erläutert, sind vielfältige Variationen und Erweiterungen dieses Grundkonzepts möglich.

So ist beispielsweise in Fig. 4b eine Ausführungsform der Spritzgießvorrichtung 40 gezeigt, in welcher anstelle eines Werkzeugträgers 24 in Form eines Drehtellers ein Werkzeugträgers 24 in Form eines Schiebetisches eingesetzt wird. So weist die Spritzgießvorrichtung 40 nach Fig. 4b zwei Werkzeugträger 24 in Form eines jeweiligen Schiebetisches auf, sowie jeweils zwei hierauf montierte erste Werkzeugformhälften 21. Weiter sind zwei Spritzgießstationen 41 sowie zwei Prägestationen 42 vorgesehen, welche, wie in Fig. 4b verdeutlicht, bezüglich des jeweiligen Werkzeugträgers 24 positioniert sind. Die Spritzgießvorrichtung 40 ist ansonsten, wie oben anhand von Fig. 5 beschrieben, aufgebaut, bis auf dass die Stellvorrichtung 25 die Werkzeugträger 24 translatorisch abwechselnd nach links und rechts verfährt.

Die Anordnung nach Fig. 4b mit den beiden benachbart angeordneten Spritzgießstationen 41 ist hierbei besonders vorteilhaft, da von den beiden Spritzgießstationen 41 aufgrund ihrer räumlichen Nähe Komponenten gemeinsam genutzt werden können.

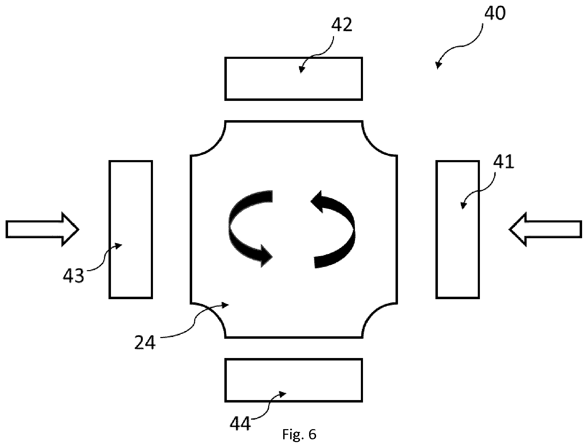

Eine weitere Abwandlung ist in Fig. 6 gezeigt:
Die Spritzgießvorrichtung 40 weist hier vier Stationen auf, nämlich die Spritzgießstation 41, die Prägestation 42 und weiter noch eine zweite Spritzgießstation 43 und eine Entformungsstation 44.

Der Werkzeugträger 24 ist hier als vertikaler und/oder horizontaler Drehteller ausgebildet. Auf dem Werkzeugträger 24 sind vier erste Werkzeugformhälften 21 jeweils um 90° zueinander versetzt angeordnet. Durch Drehen des Werkzeugträgers 24 sind diese vier ersten Werkzeugformhälften 21 somit zyklisch zwischen den Stationen 41, 42, 43 und 44 der Spritzgießvorrichtung 40 verfahrbar.

Bezüglich der zusätzlichen Komponenten ergibt sich hier folgendes:
Die zweite Spritzgießstation 43 ist aufgebaut wie die Spritzgießstation 41 nach Fig. 3, bis auf dass die zweite Spritzgießstation 43 das zweite Kunststoffmaterial 32 als Deckschicht 13 aufbringt und die oben anhand von Fig. 2a bis Fig. 2b verdeutlichten Schritte durchführt.

Die Entformungsstation 44 führt den oben anhand von Fig. 2c bereits erläuterten Schritt durch. Die Entformungsstation 44 verfügt hierbei beispielsweise über einen Roboterarm, welcher das Bauteil 10 aus der ersten Werkzeugformhälfte 21 entnimmt, wie beispielsweise anhand von Fig. 2c verdeutlicht.

Im Übrigen ist die Spritzgießvorrichtung 40 aufgebaut wie bereits oben anhand von Fig. 5 erläutert, so dass diesbezüglich auf obige Ausführungen zu Fig. 5, Fig. 1a bis Fig. 1e, sowie Fig. 2a bis Fig. 2c verwiesen wird. Die Erfindung ist im beigefügten Anspruchssatz definiert.

### Bezugsziffernliste:

- 10: Bauteil

- 11: Grundkörper
- 111: erster Teilbereich
- 112: zweiter Teilbereich

- 12: erstes Folienelement
- 121: funktionelle Schicht
- 122: Haftvermittlungsschicht

- 13: Deckschicht

- 20: Spritzgusswerkzeug
- 21: erste Werkzeugformhälfte
- 211: erste Werkzeugkavität
- 212: erste Spritzgusskavität
- 213: zweite Spritzgusskavität

- 22: zweite Werkzeugformhälfte
- 221: zweite Werkzeugkavität

- 23: dritte Werkzeugformhälfte
- 24: Werkzeugträger

- 25: Stellvorrichtung

- 31: erstes Kunststoffmaterial
- 32: zweites Kunststoffmaterial

- 40: Spritzgießvorrichtung
- 41: erste Spritzgießstation
- 411: Schließvorrichtung
- 412: Spritzeinheit

- 42: Prägestation
- 421: Prägeeinheit
- 422: Prägewerkzeug
- 424: Folienzuführungsvorrichtung
- 425: Folienabführungsvorrichtung
- 426: Folie

- 43: zweite Spritzgießstation

- 44: Entformungsstation

- 50: Prozesssteuervorrichtung

## Patentansprüche

1. Verfahren zur Herstellung eines Bauteils (10), wobei bei dem Verfahren, insbesondere aufeinanderfolgend, folgende Schritte durchgeführt werden:
a) Schließen eines Spritzgusswerkzeugs (20) umfassend eine erste Werkzeugformhälfte (21) mit einer ersten Werkzeugkavität (211) und zumindest eine zweite Werkzeugformhälfte (22), wobei eine von der ersten Werkzeugformhälfte (21) und der zumindest einen zweiten Werkezugformhälfte (22) bestimmte erste Spritzgusskavität (212) ausgebildet wird,
b) Spritzgießen eines Grundkörpers (11) durch Einbringung eines ersten Kunststoffmaterials (31) in die erste Spritzgusskavität (212),
c) Öffnen des Spritzgusswerkzeugs (20), wobei der Grundkörper (11) konturfolgend in der ersten Werkzeugkavität (211) der ersten Werkzeugformhälfte (21) verbleibt und lediglich ein erster Teilbereich (111) der Oberfläche des Grundkörpers (11) freigelegt wird, ein zweiter Teilbereich (112) der Oberfläche des Grundkörpers (11) jedoch noch in der ersten Werkzeugformhälfte (21) verbleibt,
d) Abprägen ein oder mehrerer erster Folienelemente (12) auf zumindest einen Teilbereich des freiliegenden ersten Teilbereichs (11) der Oberfläche des Grundkörpers (11), wobei der Grundkörper (11) konturfolgend in der ersten Werkzeugkavität (211) der ersten Werkzeugformhälfte (21) verbleibt und die erste Werkzeugformhälfte (21) als Prägeaufnahme für das Abprägen der ein oder mehreren ersten Folienelemente dient,
e) Entformung des Bauteils (10), umfassend den Grundkörper (11) und die ein oder mehreren ersten Folienelemente (12) aus der ersten Werkzeugformhälfte (21),
wobei die zeitliche Abfolge der Schritte b) und d) so gesteuert wird, dass der Grundkörper (11) bei Durchführung des Schritts d) nur teilweise abgekühlt ist und insbesondere noch eine mittlere Oberflächentemperatur im ersten Teilbereich der Oberfläche zwischen 20°C und 120°C, insbesondere zwischen 40°C und 100°C, aufweist, und
als Folie (426) in Schritt d) eine Heißprägefolie umfassend eine Trägerlage und eine von dieser ablösbare Transferlage verwendet wird und beim Abprägen zumindest ein durch die Formgebung des Prägewerkzeugs (422) bestimmter Ausschnitt der Transferlage unter Aktivierung einer Kleberschicht der Transferlage oder einer zwischen dem Grundkörper (11) und der Transferlage vorgesehenen Kleberschicht als erste Folienelement (12) appliziert wird, wobei
beim Abprägen ein durch die Formgebung des Prägewerkzeug (422) bestimmter Ausschnitt der Transferlage der Heißprägefolie gegen einen Ausschnitt der freiliegenden Oberfläche des Grundkörpers (11) gepresst wird,
wobei eine Kleberschicht der Transferlage oder eine zwischen dem Grundkörper (11) und der Transferlage vorgesehene Kleberschicht durch den dort erhöhten Druck/Temperatur aktiviert wird und somit im Bereich dieses Ausschnitts die Transferlage der Heißprägefolie mit der Oberfläche des Grundkörpers (11) verklebt wird und
nach Aktivierung der Kleberschicht die Heißprägefolie wieder abgezogen wird und hierbei die Trägerlage, sowie die Bereiche der Transferlage, in denen die Kleberschicht nicht aktiviert worden ist, wieder abgezogen wird, wobei als erste Folienelemente (12) die Bereiche der Transferlage der Heißprägefolie auf dem Grundkörper (11) verbleiben, in welchem die Kleberschicht durch das Prägewerkzeug (422) aktiviert worden ist, wobei zwischen den Schritten d) und e) ein- oder mehrfach folgender weiterer Schritt durchgeführt wird:
f) Aufbringen einer Deckschicht (13) aus einem zweiten Kunststoffmaterial (32) mittels Überfluten.

2. Verfahren nach Anspruch 1,
**dadurch gekennzeichnet,**
**dass** bei der Durchführung des Schritts f) der Grundkörper (11) konturfolgend in der ersten Werkzeugkavität (211) der ersten Werkzeugformhälfte (21) verbleibt.

3. Verfahren nach Anspruch 2,
**dadurch gekennzeichnet,**
**dass** bei der Durchführung des Schritts f) eine zweite Spritzgusskavität (213) mittels ein oder mehrerer dritter Werkzeugformhälften (23), insbesondere durch Abdichten der ein oder mehreren dritten Werkzeugformhälften (23) gegen den Grundkörper (11), die ein oder mehreren ersten Folienelemente (12) und/oder die erste Werkzeugformhälfte (21) ausgebildet wird, und das zweite Kunststoffmaterial (32) in die zweite Spritzgusskavität (213) einbracht wird.

4. Verfahren nach einem der Ansprüche 2 oder 3,
**dadurch gekennzeichnet,**
**dass** in Schritt f) die Deckschicht (13) derart aufgebracht wird, dass die ein oder mehreren Folienelemente (12) zwischen dem Grundkörper (11) und der Deckschicht (13) eingekapselt sind, und/oder dass in Schritt f) die Deckschicht (13) derart aufgebracht wird, dass die Deckschicht (13) die ein oder mehreren Folienelemente (12) und/oder den ersten Teilbereich (111) der Oberfläche des Grundkörpers (11) vollständig überlappt, und/oder
**dass** in Schritt f) die Deckschicht (13) derart aufgebracht wird, dass die Deckschicht (13) die ein oder mehreren Folienelemente (12) und/oder den ersten Teilbereich (111) der Oberfläche des Grundkörpers (11) lediglich teilflächig überlappt, und/oder
**dass** das zweite Kunststoffmaterial (32) aus einem thermoplastischen Kunststoffmaterial, aus einem durch Vernetzung aushärtenden Kunststoffmaterial, insbesondere einem Zweikomponenten -Material und/oder aus einem thermisch und/oder aus einem durch Strahlung härtbaren Material, und/oder aus einer Mischung solcher Kunststoffmaterialien besteht.

5. Verfahren nach einem der Ansprüche 2 bis 4,
**dadurch gekennzeichnet,**
**dass** das zweite Kunststoffmaterial (32) insbesondere durch Bestrahlung vollständig oder teilweise ausgehärtet wird, und/oder dass das zweite Kunststoffmaterial (32) aus Polyurethan oder Polyurea besteht und das erste Kunststoffmaterial (31) aus einem Thermoplast, insbesondere aus ABS, ASA, ABS-PC, PC-PBT und/oder ASA-PC besteht, und/oder
**dass** der Schritt f) mehrfach mit unterschiedlichen zweiten Kunststoffmaterialien (32) und/oder unterschiedlichen dritten Werkzeugformhälften (23) durchgeführt wird.

6. Verfahren nach einem der vorhergehenden Ansprüche,
**dadurch gekennzeichnet,**
**dass** das Verfahren weiter folgenden Schritt umfasst, der bevorzugt nach dem Schritt c) und/oder d) und weiter bevorzugt vor einem der Schritte e) und/oder f) durchgeführt wird:
Bedrucken der ein oder mehreren ersten Folienelemente und/oder des freiliegenden ersten Teilbereichs der Oberfläche des Grundkörpers in zumindest einem weiteren Teilbereich, wobei der Grundkörper konturfolgend in der ersten Werkzeugkavität der ersten Werkzeughälfte verbleibt und insbesondere die erste Werkzeugformhälfte als Bedruckhalterung für das Bedrucken der ein oder mehreren Folienelemente und/oder des freiliegenden ersten Teilbereichs der Oberfläche des Grundkörpers in dem zumindest einen weiteren Teilbereich dient.

7. Verfahren nach einem der vorgehenden Ansprüche,
**dadurch gekennzeichnet,**
**dass** zwischen den Schritten d) und e) und/oder zwischen den Schritten c) und e) und/oder vor dem Schritt d) eine optische Prüfung eines Teilbereichs der Oberfläche des Grundkörpers (11), der ein oder mehreren ersten Folienelemente (12), der Bedruckung und/oder des Bauteils (10) mittels eines optischen Sensors, insbesondere einer Kamera erfolgt.

8. Verfahren nach einem der vorgehenden Ansprüche,
**dadurch gekennzeichnet,**
**dass** in Schritt d) das Abprägen der ein oder mehreren ersten Folienelemente (12) mittels Abrollprägen, partiellem Abrollprägen oder Hubprägen durchgeführt wird, und/oder
**dass** in Schritt d) das Abprägen der ein oder mehreren ersten Folienelemente mittels eines oder mehrerer Prägewerkzeuge (422) durchgeführt wird, welche eine Folie (426) oder ein oder mehrere Ausschnitte einer Folie als erste Folienelemente (12) auf den freiliegenden ersten Teilbereich oder einen Teilbereich des freiliegenden ersten Teilbereichs (111) der Oberfläche des Grundkörpers applizieren.

9. Verfahren nach einem der vorgehenden Ansprüche,
**dadurch gekennzeichnet,**
**dass** als Folie (426) in Schritt d) eine Laminierfolie verwendet wird und beim Abprägen zumindest ein durch die Formgebung des Prägewerkzeugs (422) bestimmter Ausschnitt der Laminierfolie oder die insbesondere in Patch-Form ausgebildete Laminierfolie unter Aktivierung einer Kleberschicht der Laminierfolie oder einer zwischen der Oberfläche des Grundkörpers und der Laminierfolie vorgesehenen Kleberschicht als erstes Folienelement (12) appliziert wird.

10. Verfahren nach einem der vorgehenden Ansprüche,
**dadurch gekennzeichnet,**
**dass** vor dem Schritt a) ein oder mehrere zweite Folienelemente in die erste Spritzgusskavität (212) einbracht werden, bevorzugt in die erste Werkzeugformhälfte (21) eingelegt werden, und in Schritt (b) mit dem ersten Kunststoffmaterial (31) hinterspritzt und/oder umspritzt werden, insbesondere dass bei der Durchführung des Schritts d) ein oder mehrere der ein oder mehreren ersten Folienelemente (12) registergenau zu ein oder mehreren der zweiten Folienelemente abgeprägt werden, wozu weiter bevorzugt ein oder mehrere Registermarken oder optische Merkmale der ein oder mehreren zweiten Folienelemente und/oder der ersten Werkzeugformhälfte (21) erfasst werden und zur Steuerung des Abprägens verwendet werden.

## Claims

1. Method for producing a component (10), wherein, in the method, the following steps are carried out, in particular successively:
a. closing an injection moulding tool (20) comprising a first tool mould half (21) with a first tool cavity (211) and at least one second tool mould half (22), wherein a determined first injection moulding cavity (212) is formed by the first tool mould half (21) and the at least one second tool mould half (22),
b. injection moulding a base body (11) by introducing a first plastic material (31) into the first injection moulding cavity (212),
c. opening the injection moulding tool (20), wherein the base body (11) remains following the contour in the first tool cavity (211) of the first tool mould half (21), and only a first partial region (111) of the surface of the base body (11) is uncovered, yet a second partial region (112) of the surface of the base body (11) still remains in the first tool mould half (21),
d. embossing one or more first foil elements (12) onto at least one partial region of the uncovered first partial region (11) of the surface of the base body (11), wherein the base body (11) remains following the contour in the first tool cavity (211) of the first tool mould half (21) and the first tool mould half (21) serves as an embossing receptacle for the embossing of the one or more first foil elements,
e. demoulding the component (10), comprising the base body (11) and the one or more first foil elements (12) from the first tool mould half (21),
wherein the chronological order of steps b) and d) is controlled so that the base body (11) only partially cools down when carrying out step d) and in particular still has an average surface temperature in the first partial region of the surface of between 20°C and 120°C, in particular between 40°C and 100°C, and as a foil (426) in step d) a hot stamping foil comprising a support layer and a transfer layer that can be detached therefrom is used, and while embossing at least one section of the transfer layer, determined by the shape of the embossing tool (422), by activating one adhesive layer of the transfer layer or one adhesive layer, provided between the base body (11) and the transfer layer, is applied as a first foil element (12), wherein
during embossing, a section of the transfer layer of the hot stamping foil, determined by the shape of the embossing tool (422), is pressed against a section of the exposed surface of the base body (11),
wherein an adhesive layer of the transfer layer or an adhesive layer provided between the base body (11) and the transfer layer, is activated by the increasing pressure/temperature and thus, in the region of this section, the transfer layer of the hot stamping foil is glued to the surface of the base body (11) and
after activating the adhesive layer, the hot stamping foil is again removed and therefore the support layer, as well as the regions of the transfer layer in which the adhesive layer has not been activated, is again removed, wherein as a first foil element (12), the region of the transfer layer of the hot stamping foil remains on the base body (11), in which the adhesive layer has been activated by the embossing tool (422), wherein between steps d) and e), the following additional step is carried out once or several times:
f) application of a cover layer (13) consisting of a second plastic material (32) by means of submersion.

2. Method according to claim 1,
**characterised in that**
when carrying out step f), the base body (11) remains following the contour in the first tool cavity (211) of the first tool mould half (21).

3. Method according to claim 2,
**characterised in that**
when carrying out step f), a second injection moulding cavity (213) is formed by means of one or more third tool mould halves (23), in particular by sealing the one or more third tool mould halves (23) from the base body (11), the one or more first foil elements (12) and/or the first tool mould halves (21), and the second plastic material (32) is introduced into the second injection moulding cavity (213).

4. Method according to one of claims 2 or 3,
**characterised in that**
in step f), the cover layer (13) is applied in such a way that the one or more foil elements (12) are encapsulated between the base body (11) and the cover layer (13), and/or
in step f), the cover layer (13) is applied in such a way that the cover layer (13) completely overlaps the one or more foil elements (12) and/or the first partial region (111) of the surface of the base body (11), and/or
in step f), the cover layer (13) is applied in such a way that the cover layer (13) only partially overlaps the one or more foil elements (12) and/or the first partial region (111) of the surface area of the base body (11), and/or
the second plastic material (32) consists of a thermoplastic material, a plastic material cured through cross-linking, in particular a two-component material, and/or a thermally curable material and/or a material cured by radiation, and/or a mix of such plastic materials.

5. Method according to one of claims 2 to 4,
**characterised in that**
the second plastic material (32) is cured in particular completely or partially through irradiation, and/or
the second plastic material (32) consists of polyurethane or polyurea and the first plastic material (31) consists of a thermoplastic, in particular of ABS, ASA, ABS-PC, PC-PBT and/or ASA-PC, and/or
step f) is carried out several times with different second plastic materials (32) and/or different third tool mould halves (23).

6. Method according to one of the preceding claims,
**characterised in that**
the method further comprises the following step, which is preferably carried out after step c) and/or d) and more preferably before one of steps e) and/or f):
imprinting the one or more first foil elements and/or the uncovered first partial region of the surface of the base body in at least one other partial region, wherein the base body remains following the contour in the first tool cavity of the first tool mould half and in particular the first tool mould half serves as an imprinting mount for the imprinting of the one or more foil elements and/or the uncovered first partial region of the surface of the base body in the at least one further partial region.

7. Method according to one of the preceding claims,
**characterised in that**
between steps d) and e) and/or between steps c) and e) and/or before step d), an optical check of a partial region of the surface of the base body (11), of one or more first foil elements (12), of the imprinting and/or the component (10), takes place by means of an optical sensor, in particular a camera.

8. Method according to one of the preceding claims, **characterised in that**
in step d), embossing the one or more first foil elements (12) is carried out by means of roll-off embossing, partial roll-off embossing or stroke embossing, and/or
in step d), embossing the one or more first foil elements is carried out by means of one or more embossing tools (422), which apply a foil (426) or one or more sections of a foil as first foil elements (12) onto the uncovered first partial region or one partial region of the uncovered first partial region (111) of the surface of the base body.

9. Method according to one of the preceding claims,
**characterised in that**
as a foil (426) in step d), a laminating foil is used and, during embossing, at least one section of the laminating foil, determined by the design of the embossing tool (422), or the laminating foil formed in particular in patch form is applied as the first foil element (12) by activating an adhesive layer of the laminating foil or an adhesive layer provided between the surface of the base body and the laminating foil.

10. Method according to one of the preceding claims,
**characterised in that**
before step a), one or more second foil elements are introduced into the first injection moulding cavity (212), preferably inserted into the first tool mould half (21), and in step b) are back injected and/or overmoulded with the first plastic material (31), in particular **in that**, when carrying out step d), one or more of the one or more first foil elements (12) are embossed with register accuracy with one or more of the second foil elements, for which more preferably one or more register marks or optical features of the one or more second foil elements and/or the first tool mould half (21) are detected and are used for controlling the embossing.

## Revendications

1. Procédé de fabrication d'un composant (10), dans lequel pour le procédé, les étapes suivantes sont réalisées en particulier successivement :
a) la fermeture d'un outil de moulage par injection (20) comprenant une première moitié de moule d'outil (21) avec une première cavité d'outil (211) et au moins une deuxième moitié de moule d'outil (22), dans lequel une première cavité de moulage par injection (212) déterminée par la première moitié de moule d'outil (21) et l'au moins une deuxième moitié de moule d'outil (22) est réalisée,
b) le moulage par injection d'un corps de base (11) par introduction d'un premier matériau plastique (31) dans la première cavité de moulage par injection (212),
c) l'ouverture de l'outil de moulage par injection (20), dans lequel le corps de base (11) reste en suivant le contour dans la première cavité d'outil (211) de la première moitié de moule d'outil (21) et juste une première zone partielle (111) de la surface du corps de base (11) est dégagée, une seconde zone partielle (112) de la surface du corps de base (11) reste toutefois encore dans la première moitié de moule d'outil (21),
d) l'estampage d'un ou plusieurs premiers éléments de film (12) sur au moins une zone partielle de la première zone partielle (11) dégagée de la surface du corps de base (11), dans lequel le corps de base (11) reste en suivant le contour dans la première cavité d'outil (211) de la première moitié de moule d'outil (21) et la première moitié de moule d'outil (21) sert de logement d'estampage pour l'estampage des un ou plusieurs premiers éléments de film,
e) le démoulage du composant (10) comprenant le corps de base (11) et les un ou plusieurs premiers éléments de film (12) de la première moitié de moule d'outil (21),
dans lequel la suite temporelle des étapes b) et d) est commandée de sorte que le corps de base (11) soit refroidi seulement partiellement lors de la réalisation de l'étape d) et présente en particulier encore une température de surface médiane dans la première zone partielle de la surface entre 20 C et 120 C, en particulier entre 40 C et 100 C, et
un film d'estampage à chaud comprenant une couche porteuse et une couche de transfert détachable de celle-ci est utilisé comme film (426) à l'étape d) et lors de l'estampage, au moins une section déterminée par la formation de l'outil d'estampage (422) de la couche de transfert est appliquée en activant une couche de colle de la couche de transfert ou une couche de colle prévue entre le corps de base (11) et la couche de transfert comme premier élément de film (12), dans lequel lors de l'estampage, une section déterminée par la formation de l'outil d'estampage (422) de la couche de transfert du film d'estampage à chaud est pressée contre une section de la surface dégagée du corps de base (11), dans lequel une couche de colle de la couche de transfert ou une couche de colle prévue entre le corps de base (11) et la couche de transfert est activée par la pression/température qui y est augmentée et ainsi dans la zone de cette section, la couche de transfert du film d'estampage à chaud est collée à la surface du corps de base (11) et
après l'activation de la couche de colle, le film d'estampage à chaud est de nouveau retiré et ici la couche porteuse, ainsi que les zones de la couche de transfert, dans lesquelles la couche de colle n'a pas été activée, est de nouveau retirée, dans lequel comme premiers éléments de film (12), les zones de la couche de transfert du film d'estampage à chaud restent sur le corps de base (11), dans lequel la couche de colle a été activée par l'outil d'estampage (422), dans lequel entre les étapes d) et e), l'autre étape suivante est réalisée une fois ou plusieurs fois :
f) l'application d'une couche de recouvrement (13) en un second matériau plastique (32) par inondation.

2. Procédé selon la revendication 1,
**caractérisé en ce que**
lors de la réalisation de l'étape f), le corps de base (11) reste en suivant le contour dans la première cavité d'outil (211) de la première moitié de moule d'outil (21).

3. Procédé selon la revendication 2,
**caractérisé en ce que**
lors de la réalisation de l'étape f), une seconde cavité de moulage par injection (213) est réalisée au moyen d'une ou plusieurs troisièmes moitiés de moule d'outil (23), en particulier par étanchéité des une ou plusieurs troisièmes moitiés de moule d'outil (23) contre le corps de base (11), les un ou plusieurs premiers éléments de film (12) et/ou la première moitié de moule d'outil (21) est réalisée, et le second matériau plastique (32) est introduit dans la seconde cavité de moulage par injection (213).

4. Procédé selon l'une quelconque des revendications 2 ou 3,
**caractérisé en ce que**
à l'étape f), la couche de recouvrement (13) est appliquée de telle manière que les un ou plusieurs éléments de film (12) soient encapsulés entre le corps de base (11) et la couche de recouvrement (13), et/ou à l'étape f), la couche de recouvrement (13) est appliquée de telle manière que la couche de recouvrement (13) recouvre complètement les un ou plusieurs éléments de film (12) et/ou la première zone partielle (111) de la surface du corps de base (11), et/ou
à l'étape f), la couche de recouvrement (13) est appliquée de telle manière que la couche de recouvrement (13) recouvre juste sur une partie de la surface les un ou plusieurs éléments de film (12) et/ou la première zone partielle (111) de la surface du corps de base (11), et/ou
le second matériau plastique (32) se compose d'un matériau thermoplastique, d'un matériau plastique durcissant par réticulation, en particulier un matériau à deux composants et/ou un matériau durcissable thermiquement et/ou d'un matériau durcissable par rayonnement, et/ou d'un mélange de tels matériaux plastiques.

5. Procédé selon l'une quelconque des revendications 2 à 4,
**caractérisé en ce que**
le second matériau plastique (32) est durci complètement ou partiellement en particulier par rayonnement, et/ou le second matériau plastique (32) se compose de polyuréthane ou de polyurée et le premier matériau plastique (31) se compose d'un thermoplaste, en particulier de ABS, ASA, ABS-PC, PC-PBT et/ou ASA-PC, et/ou
l'étape f) est réalisée plusieurs fois avec différents seconds matériaux plastiques (32) et/ou différentes troisièmes moitiés de moule d'outil (23).

6. Procédé selon l'une quelconque des revendications précédentes,
**caractérisé en ce que**
le procédé comprend encore l'étape suivante qui est de préférence réalisée après l'étape c) et/ou d) et encore de préférence avant une des étapes e) et/ou f) :
l'impression des un ou plusieurs premiers éléments de film et/ou de la première zone partielle dégagée de la surface du corps de base dans au moins une autre zone partielle, dans lequel le corps de base reste en suivant le contour dans la première cavité d'outil de la première moitié d'outil et en particulier la première moitié de moule d'outil sert de support d'impression pour l'impression des un ou plusieurs éléments de film et/ou de la première zone partielle dégagée de la surface du corps de base dans l'au moins une autre zone partielle.

7. Procédé selon l'une quelconque des revendications précédentes,
**caractérisé en ce que**
une vérification optique d'une zone partielle de la surface du corps de base (11) des un ou plusieurs premiers éléments de film (12), de l'impression et/ou du composant (10) est effectuée au moyen d'un capteur optique, en particulier une caméra entre les étapes d) et e) et/ou entre les étapes c) et e) et/ou avant l'étape d) .

8. Procédé selon l'une quelconque des revendications précédentes,
**caractérisé en ce que**
à l'étape d), l'estampage des un ou plusieurs premiers éléments de film (12) est réalisé par estampage-déroulement, estampage-déroulement partiel ou estampage-levage, et/ou
à l'étape d), l'estampage des un ou plusieurs premiers éléments de film est réalisé au moyen d'un ou plusieurs outils d'estampage (422) qui appliquent un film (426) ou une ou plusieurs sections d'un film comme premiers éléments de film (12) sur la première zone partielle dégagée ou une zone partielle de la première zone partielle (111) dégagée de la surface du corps de base.

9. Procédé selon l'une quelconque des revendications précédentes,
**caractérisé en ce que**
un film de laminage est utilisé comme film (426) à l'étape d) et lors de l'estampage, au moins une section déterminée par la formation de l'outil d'estampage (422) du film de laminage ou le film de laminage réalisé en particulier sous la forme de patch est appliqué en activant une couche de colle du film de laminage ou une couche de colle prévue entre la surface du corps de base et le film de laminage comme premier élément de film (12).

10. Procédé selon l'une quelconque des revendications précédentes,
**caractérisé en ce que**
avant l'étape a), un ou plusieurs seconds éléments de film sont introduits dans la première cavité de moulage par injection (212), de préférence sont insérés dans la première moitié de moule d'outil (21), et à l'étape b) sont surmoulés par injection et/ou enrobés avec le premier matériau plastique (31), en particulier **en ce que** lors de la réalisation de l'étape d), un ou plusieurs des un ou plusieurs premiers éléments de film (12) sont estampés en parfait repérage par rapport à un ou plusieurs des seconds éléments de film, pour quoi de manière davantage préférée, une ou plusieurs marques de repérage ou caractéristiques optiques des un ou plusieurs seconds éléments de film et/ou de la première moitié de moule d'outil (21) sont détectées et sont utilisées pour la commande de l'estampage.
